# EUROPEAN PATENT SPECIFICATION

(11) **EP 4 179 280 B1**
(45) Date of publication and mention of the grant of the patent: **21.08.2024**
(21) Application number: 21746124.3
(22) Date of filing: 12.07.2021
(51) Int. Cl.: G01G 19/414, G06Q 20/20, G07G 1/00

(54) **DEVICE, SYSTEM AND METHOD FOR WEIGHING AN ARTICLE**
VORRICHTUNG, SYSTEM UND VERFAHREN ZUM WIEGEN EINES ARTIKELS
DISPOSITIF, SYSTÈME ET PROCÉDÉ PERMETTANT DE PESER UN ARTICLE

(30) Priority: 10.07.2020 GB 202010685
(43) Date of publication of application: 17.05.2023
(73) Proprietor: Analog Republic Limited, London Greater London N1 7GU (GB)
(72) Inventor: CURRIE, Derek Joseph, London, Greater London N1 7GU (GB); NEAL, Christopher Luke, London, Greater London N1 7GU (GB)
(74) Representative: Loustalan, Paul William
(86) International application number: PCT/GB2021/051779
(87) International publication number: WO 2022/008936

(56) References cited:
- US-A1- 2011 259 959
- US-A1- 2011 270 696

## Description

### Technical Field

This invention relates to weighing an article, and in particular a terminal device, server, weighing scale, system, and method for weighing an article in a retail environment.

### Background of the invention

Conventionally, customers in a retail environment, such as a supermarket, pick up a product they wish to purchase from an aisle and take it to a cashier. The customer then places the product on the cashier's desk for the cashier to scan. Once all the products are scanned the accumulative price of the products is calculated and the customer is able to pay the cashier for the products.

More recently the role of the cashier has been replaced with self-checkout machines, which allow the customer to self-scan the products they wish to buy. Once all the products are scanned the customer can pay for the products by depositing cash, performing a debit card payment or the like. A disadvantage of the self-checkout machines is that they are large and expensive. This means that there are often a limited number of self-checkout machines within retail environments. In turn, this means that queues develop at the point of sale in the store. A further disadvantage of the self-checkout machines is that they are configured to only accept products from the store in the scanning and payment process, and do not recognise personal items of the customer such as containers and bags. Any use of such personal items can result in an error-message or alert being displayed on the self-checkout machines, which usually requires correction or validation from a store employee before the customer can proceed with their payment. This restricts the ability of the customer to use their own containers for products and further compounds the problem of queues for the self-checkout machines.

Another recent development in the retail industry relates to the changes in packaging conventionally used to contain and preserve products. In an effort to reduce pollution and tackle climate change, it is important that the retail industry moves away from packaging such as single-use plastics where possible. It is economically and environmentally advantageous to encourage customers to bring or buy reusable containers for products. By doing this, stores can keep their products in larger refillable storage units such that individual packaging is not required. Customers can then fill their reusable containers from the larger storage units to obtain the desired amount of the product.

US 2011/0259959 A1 discloses a container for sale as a bulk item container, wherein the container presented for sale includes at least one scannable code affixed thereto indicating the empty weight of the container. The container is received at a checkout counter, where the at least one code is scanned to register the empty weight of the container, which is communicated to a checkout register system. The container is weighed along with the product therein to determine a total weight of the container and product, which is also communicated to the checkout register system. The checkout register system automatically subtracts the empty weight of the container from the total weight of the container and product to determine a weight of the product contained in the container. The checkout register system receives a product code and computes a price responsive to the determined weight and a product price per weight indicated by the product code.

It is not disclosed in US2011/0259959 A1 that the underlying method comprises a step of receiving the weighing scale identifier code of the weighing scale inputted or scanned on a terminal device by the user.

However, using a reusable container complicates the process of paying for the product. Where single-use plastics packaging allows products to be packaged and labelled consistently in terms of what is in the packaging and the amount thereof, it is much more laborious to determine how much product is in a reusable container. In stores where refillable storage units are currently used, customers have to empty their reusable containers at the cashier's desk, weigh the product on a scale, pay for the product according to the weight displayed by the scale, and then put the product back into the reusable container before leaving the store. This process is slow, inefficient and causes queues at the point of sale.

It has been appreciated that it would be desirable to have a device, system and method that simplifies the process of obtaining, weighing, and paying for a product and solves the problem of inefficiencies and queues in a retail environment.

### Summary of the Invention

According to a first aspect of the invention, a method of determining the weight of an article is provided. The method is performed in a distributed computing environment including a terminal device, a server and a weighing scale, and the method includes receiving, at a terminal device, a selection of a container from a user for storing an article, retrieving a weight of the selected container from a first look-up table, wherein the first look-up table includes a container identifier and an associated container weight for one or more containers. The method also includes prompting, by the terminal device, the user to place the container storing the article onto a weighing scale, the weighing scale being associated with a weighing scale identifier code, wherein the weighing scale sends a weight measurement value, corresponding to a weight present on the weighing scale, to a server, and wherein the weight measurement value is stored, or replaces a previous weight measurement value associated with the weighing scale identifier code, in a second look-up table, the second look-up table including a weighing scale identifier code and an associated weighing scale measurement value for one or more weighing scales. The method also includes receiving the weighing scale identifier code of the weighing scale, inputted or scanned on the terminal device by the user, and retrieving, at the server, the weight measurement value associated with the weighing scale identifier code from the second look-up table, the weight measurement value corresponding to the combined weight of the container and the article. When the weighing scale identifier code is inputted or scanned by the user, it is sent from the terminal device to the server to initiate the retrieval of the weight measurement value. Subsequently, the weight of the article is calculated from the difference between the weight of the container and the combined weight of container and the article.

An advantage of this method is that the process of weighing an article is more efficient, as it does not require the user to empty the container storing the article at the weighing scale and then refill it in order to determine the weight of the article. Furthermore, storing the weight measurement value of the weighing scale at a second look-up table at the server removes computational burden from the weighing scale and provides the user with the benefit of obtaining the weight measurement value simply by scanning or inputting the weighing scale identifier code on the terminal device.

Preferably, the method further comprises adding an entry corresponding to the container to the first look-up table, including obtaining the weight of the container, associating a container identifier with the container, and adding the weight of the container and the associated container identifier for the container to the first look-up table. The user may add a container to the first look-up table of their own volition. The user may also be prompted to add a container to the first look-up table if the first look-up table is initially empty. The user is preferably shown a container list, displayed on the terminal device, and selects, adds, or deletes a container from the displayed container list. The container list preferably includes the containers that the user has already saved, corresponding to the containers stored in the first look-up table. Alternatively, the container list is the first look-up table. Providing the user with the capability to add a container to the first look-up table ultimately allows the user to store the article in any desired or bespoke container.

Preferably, obtaining the weight of the container comprises prompting, by the terminal device, the user to place the container onto the weighing scale associated with the weighing scale identifier code, receiving the weighing scale identifier code of the weighing scale inputted or scanned on the terminal device by the user, and retrieving, at the server, the weight measurement value associated with the weighing scale identifier code from the second look-up table, the weight measurement value corresponding to the weight of the container. When the weighing scale identifier code is inputted or scanned by the user, the weighing scale identifier code is preferably sent from the terminal device to the server to initiate the retrieval of the weight measurement value. This method provides the user with the benefit of obtaining the weight measurement value corresponding to the weight of the container by simply scanning or inputting the weighing scale identifier code on the terminal device. This also means that the weight of the container and the weight of the article can be determined in a similar way, on the same weighing scale or a weighing scale of the same type, each with a unique weighing scale identifier code.

Alternatively, obtaining the weight of the container comprises prompting, by the terminal device, the user to measure the weight of the container and receiving, at the terminal device, via an input from the user, the weight of the container. As such, the user may use a weighing scale that is of a different type to the weighing scale associated with a weighing scale identifier code. The user may be provided with the choice or options of weighing the container with a weighing scale associated with a weighing scale identifier code as explained above, and weighing the container using a different weighing scale as explained here. The advantage of giving a user this choice is that they can choose to weigh their container at home for instance, when they may not have access to a weighing scale of the type associated with a weighing scale identifier code. This, in turn, may also reduce the time required to choose, weigh, and purchase, an article while in the retail environment.

Preferably, the method further comprises identifying the article from an article identifier code inputted or scanned on a terminal device by a user. The user may, at the start of the method, scan or input the article identifier code of the article. The article identifier code is preferably encoded in a Quick Response (QR) code or barcode which the user scans with the terminal device. Alternatively the article identifier code may be encoded in a barcode or any other numeric, textual, or graphical format. Once scanned or inputted, the article identifier code is sent to the server where it is used to identify the article to which it corresponds. The server maintains an article look-up table that includes a plurality of article identifier codes, whereby each article identifier code in the article look-up table is associated with information regarding an individual or group of articles. The information may include the name of the article, whether the article has a predetermined weight, whether the article has a price-per-weight value and/or whether the article has a fixed price value that is independent of the weight of the article. This information may be retrieved by searching for the article identifier code scanned or input by the user.

Once the article is identified, the method may further comprise prompting, via the terminal device, the user to select a container from the first look-up table when the weight of the article is unknown. An advantage of this is that the method is enacted efficiently and only when necessary, after identifying that the article selected by the user does not have a predetermined weight and thus needs to be weighed.

Preferably, after calculating the weight of the article, the method further comprises determining a price value of the article dependent on the calculated weight of the article, and adding the price value to a total price value. The price value of the article may be calculated by multiplying the calculated weight of the article by the price-per-weight value of the article. The price-per-weight value of the article may be stored on the article look-up table at the server. Either the terminal device or the server may perform the calculation of the price value of the article. The total price value is a running sum of the price values of the articles selected and scanned by the user, and may be stored in the terminal device, the server, or both. The total price value and individual price values of scanned articles are stored in a virtual shopping cart at the server. The virtual shopping cart is associated with the user of the terminal device. The virtual shopping cart is also displayable on the terminal device, by retrieving the virtual shopping cart from the server. This method advantageously provides the price and a total price of articles scanned and weighed by the user, such that it is not necessary for the user to rescan the weighed articles at a self-checkout or cashier's desk.

The method may further comprise receiving, from the user, a checkout request; and in response to the checkout request, providing payment means at the terminal device for the user to electronically pay an amount equal to the total price value. This advantageously allows the user to pay for the articles they have scanned without visiting a self-checkout or cashier's desk. The user may then pay, by debit card, credit card, mobile payment or the like. The user's payment details may be stored in the terminal. The payment is processed at the server and a receipt is then generated and stored.

Preferably, the weighing scale sends a weight measurement value corresponding to a weight present on the weighing scale to the server upon determining that the weight measurement value is different from a previous weight measurement value associated with the weight scale identifier code of the weight scale. This advantageously reduces computational burden at the server, as the second look-up table is only updated when the weighing scale sends a weight measurement value, and this only happens when the weight present on the weighing scale changes.

This process of updating the weight measurement value, by sending the weight scale measurement value from the weighing scale to the server once a weight on the weighing scale changes, may be configured not to occur when the weight measurement value is equal or near to zero weight. This advantageously prevents the weight measurement value being updated when the user removes the container storing the article from the weighing scale, which in turn prevents erroneous calculations of the weight of the article. This may also allow the user to remove the article from the weighing scale before scanning the weighing scale identifier code, without altering the weight measurement value. In other words, the weight measurement value may only update when a new positive weight measurement value is recorded by the weighing scale.

The weighing scale may selectively display the weighing scale identifier code such that the weighing scale identifier code is only displayed when the weight measurement value is sent to the server, upon determining that the weight measurement value is different from a previous weight measurement value associated with the weight scale identifier code of the weight scale. Furthermore, the weighing scale may only display the weighing scale identifier code whilst a weight is detected on the weighing area of the weighing scale. This advantageously ensures that the weight measurement value corresponds to the weight present on the weighing area of the weighing scale when the weighing scale identifier code is scanned by the user, which in turn ensures the correct and accurate weight measurement value is retrieved.

The weighing scale may display the weight measurement value on a display of the weighing scale visible to the user.

Determining that the weight measurement value is different from a previous weight measurement value associated with the weight scale identifier code of the weight scale may include comparing the previous weight measurement value to the weight measurement value, and, if the difference between the previous weight measurement value and the weight measurement value is greater than a threshold, determining that the weight measurement value is different from the previous weight measurement value. Otherwise, if the difference between the previous weight measurement value and the weight measurement value is less than the threshold, it is determined that the weight measurement value is not different from the previous weight measurement value, such that the weighing scale does not send the weight measurement value to the server. The threshold may be between about 1% and about 10% of the weight measurement, preferably between about 3% and about 8%. In one embodiment the threshold may be 5% of the weight measurement. This threshold provides a buffer such that negligible or erroneous differences between weight measurements of the weighing scale are not considered. This makes the method perform more efficiently.

Preferably, the weighing scale sends the weight measurement value to the server substantially in real-time. This means that when an article is placed on the weighing scale to be weighed, the process of sending the weight measurement value to the server, to be stored in the second look-up table, occurs instantaneously or in a short period of time. The process of retrieving the weight from the second look-up table using the weighing scale identifier code may also take place in real-time, allowing the user to acquire the weight of the article shortly after scanning or inputting the weighing scale identifier code.

The user may be prompted to scan or input the weighing scale identifier code of the weighing scale when or after the user is prompted to place the container storing the article on the weighing scale.

Preferably, after being prompted to scan or input the weighing scale identifier code of the weighing scale, the method further includes prompting, by the terminal device, the user to provide a 'weigh' input to the terminal device, wherein the weigh input informs the terminal device that the user has placed the container storing the article on the weighing scale such that the container storing the article is ready to be weighed. Once the weigh input to the terminal device is received, the terminal device sends the weighing scale identifier code to the server to retrieve the weight measurement value. An advantage of this is that it makes it clear to the user when the weight measurement value will be retrieved and thus allows them to ensure that the container storing the article is on the weighing scale and the weighing scale is in a settled, steady state before the weight measurement value is retrieved.

According to a second aspect of the invention, a method for determining the weight of an article, performed on a terminal device, is provided. The method includes receiving, from a user, a selection of a container for storing an article and prompting the user to place the container storing the article onto a weighing scale, the weighing scale being associated with a weighing scale identifier code. The method also includes receiving the weighing scale identifier code of the weighing scale, inputted or scanned by the user, and then performs one of two further processes. In the first process, the method includes retrieving, from a second look-up table at the server, a weight measurement value associated with the weighing scale identifier code, the weight measurement value corresponding to the combined weight of the container and the article retrieving a weight of the container from a first look-up table, wherein the first look-up table includes a container identifier and an associated container weight and for one or more containers. The method further includes calculating the weight of the article from the difference between the weight of the container and the combined weight of the container and the article. In the second process, the method includes sending the selection of the container for storing the article to a server, sending the weighing scale identifier code of the weighing scale to the server; and receiving the weight of the article from the server, wherein the server calculates the weight of the article, by retrieving, from a second look-up table at the server, a weight measurement value associated with the weighing scale identifier code, the weight measurement value corresponding to the combined weight of the container and the article, retrieving a weight of the container from a first look-up table, wherein the first look-up table includes a container identifier and an associated container weight and for one or more containers, and calculating the weight of the article from the difference between the weight of the container and the combined weight of the container and the article.

An advantage of this method is that the process of weighing an article is more efficient, as it does not require the user to empty the container storing the article at the weighing scale and then refill it in order to determine the weight of the article. Furthermore, weighing the article and calculating the weight of the article is made simpler for the user, as they only have to place the container on the weighing scale and scan or input a weighing scale code on a terminal device to obtain the calculated weight of the article. This removes the requirement of reading the weighing scales, inputting the weight measurement value, and calculating the weight of the article manually.

The first look-up table may be the same as a container list as discussed above, which is maintained at the terminal device. Alternatively, the first look-up table is maintained at the server. Preferably, the first look-up table is stored on the server and cached to the terminal device, such that retrieving information from the server relating to the first look-up table is not necessary during the method according to the first and second aspects of the invention.

According to a third aspect of the invention, a method for determining the weight of an article is provided, wherein the method is performed on a server. The method comprises: receiving, from a weighing scale, a weight measurement value corresponding to a weight present on the weighing scale, the weighing scale being associated with a weighing scale identifier code. The method also includes storing, or replacing a previous weight measurement value associated with the weighing scale identifier code with, the weight measurement value in a second look-up table, the second look-up table including a weighing scale identifier code and an associated weighing scale measurement value for one or more weighing scales. The method further includes one of the following two options. In the first option, the method includes receiving, from a terminal device, a selection of a container from a user, retrieving a weight of the container from a first look-up table, the first look-up table including a container identifier and an associated container weight for one or more containers, receiving, from the terminal device, the weighing scale identifier code of the weighing scale, retrieving the weight measurement value associated with the weighing scale identifier code from the second look-up table, the weight measurement value corresponding to a combined weight of the container and an article, and subsequently calculating the weight of the article from the difference between the weight of the container and the combined weight of container and the article. In the second option, the method includes receiving, from the terminal device, the weighing scale identifier code of the weighing scale and providing, to the terminal device, the weight measurement value associated with the weighing scale identifier code from the second look-up table, the weight measurement value corresponding to a combined weight of the container and the article.

An advantage of this method is that the process of weighing an article is more efficient, as it does not require the user to empty the container storing the article at the weighing scale and then refill it in order to determine the weight of the article. Furthermore, weighing the article and calculating the weight of the article is made simpler for the user, as they only have to place the container on the weighing scale and scan or input a weighing scale code on a terminal device to obtain the calculated weight of the article. This removes the requirement of reading the weighing scales, inputting the weight measurement value, and calculating the weight of the article manually.

Preferably, the method according to the third aspect of the invention further includes receiving, from the terminal device, an article identifier code inputted or scanned by the user, and identifying the article from the article identifier code. The server maintains an article look-up table that includes a plurality of article identifier codes, whereby each article identifier code in the article look-up table is associated with information regarding an individual or group of articles. The information may include the name of the article, whether the article has a predetermined weight, whether the article has a price-per-weight value, and/or whether the article has a fixed price value that is independent of the weight of the article. This information may be retrieved on the server by searching for the article identifier code scanned or input by the user.

Once the article is identified, the method may further comprise prompting, via the terminal device, the user to select a container from the first look-up table when the weight of the article is unknown. An advantage of this is that the method is enacted efficiently and only when necessary, after identifying that the article selected by the user does not have a predetermined weight and thus needs to be weighed.

Preferably, after calculating the weight of the article, the method further comprises determining a price value of the article dependent on the calculated weight of the article, and adding the price value to a total price value. The price value of the article may be calculated by multiplying the calculated weight of the article by a price-per-weight value of the article. The price-per-weight value of the article may be stored on the article look-up table at the server. The total price value is displayed to the user. This method advantageously provides the price and a total price of articles scanned and weighed by the user, such that it is not necessary for the user to rescan the weighed articles at a self-checkout or cashier's desk.

The method may further comprise receiving, from the user, a checkout request; and in response to the checkout request, receiving, from the terminal device, an electronic payment; and subsequently processing the electronic payment. This advantageously allows the user to pay for the articles they have scanned without visiting a self-checkout or cashier's desk.

According to a fourth aspect of the disclosure, a method for determining the weight of an article is provided, wherein the method is performed on a weighing scale. This method includes performing a first measurement of a weight present on a weighing area of a weighing scale to acquire a first weight measurement value, performing a second measurement of a weight present on the weighing area of the weighing scale to acquire a second weight measurement value, determining that a difference exists between the first and the second weight measurement values, corresponding to a change in the weight present on the weighing area of the weighing scale, and sending, to a server, the second weight measurement value and a weighing scale identifier code, wherein the weighing scale identifier code uniquely identifies the weighing scale. An advantage of sending weight measurements directly to a server is that the process of obtaining a weight of the article is controlled by access to the server. This removes the need for a user to manually read the weighing scales and then input the weight measurement value manually. Only sending the second weight measurement value when a difference exists with respect to a first weight measurement value makes the weighing scale smarter, and means that weight measurement values are sent to the server only when necessary, which is more efficient.

Preferably, the method according to the fourth aspect of the invention further includes comparing the second measurement value to the first measurement value, and if the difference between the second measurement value and the first measurement value is greater than a threshold, determining that a difference exists, or otherwise, if the difference between second measurement value and the first measurement value is less than the threshold, determining that a difference does not exist and not sending the second weight measurement value to the server. This advantageously stops the weighing scale from sending a weight measurement value to the server when the change in weight on the weighing scale is negligible or erroneous, which ensures the efficiency of the weighing scale in sending weight measurement values to the server is maintained.

A measurement may be performed by the weighing scales to obtain a weight measurement value at least every five seconds. This ensures that the weighing scale remains active and responsive to any changes in weight on the weighing area of the weighing scale.

According to a fifth aspect of the invention, a distributed computing system comprising a terminal device, a server and a weighing scale is provided. Each of the terminal device, the server and the weighing scale include a processor and a memory, the server having a means for communicating with the terminal device and the weighing scale, the weighing scale and the terminal device each having a means for communicating with the server. The respective memory of each of the terminal, the server and the weighing scale have instructions thereon that cause the respective processor of the terminal, the server and the one or more weighing scales to perform the method according to the first aspect of the invention, or any of the features described with reference thereto.

According to a sixth aspect of the invention, a terminal device, including a memory, a processor, and means of communicating with a server is provided. The memory has instructions stored thereon that cause the processor to perform the method according to the second aspect of the invention, or any of the features described with reference thereto.

According to a seventh aspect of the invention, a server, including a memory, a processor, and means of communicating to a weighing scale and a terminal device is provided. The memory has instructions stored thereon that cause the processor to perform the method according to the third aspect of the invention, or any of the features described with reference thereto.

According to an eighth aspect of the invention, a weighing scale, including a memory, a processor and a means of communicating to a server, is provided. The memory has instructions stored thereon that cause the processor to perform the method according to the fourth aspect of the invention, or any of the features described with reference thereto.

According to a ninth aspect of the disclosure, a method for determining that a user of a terminal device is leaving an area at an exit point with an unpurchased article is provided. The method comprises maintaining a user list on a server, the user list including an a user account associated with a terminal device, and then upon detecting, at the terminal device, a signal broadcast from a signal broadcasting means situated at or near an exit point, checking the user account associated with the terminal device, the user account including a list of one or more articles, the one or more articles being associated with a purchased or unpurchased status, and then, upon determining that the user account includes an article associated with an unpurchased status, sending a notification to a control device, the notification including information about at least one of: the user of the terminal device, the terminal device, the user account, the unpurchased status, and the article associated with the unpurchased status. An advantage of this method is that the control device, which may be in the possession of a retail store manager for example, is effectively notified when a specific user leaves the area such as a retail store without purchasing an article which they have scanned.

Preferably, the method further comprises receiving, at the server, from the terminal device, an article identifier code inputted or scanned on the terminal device, identifying, at the server, the article from the article identifier code, and updating the user account associated with the terminal device by adding the article to the user account. If, at the server, a first request from the control terminal to view the user list is received, the method further includes responding to the first request by sending, from the server to the control terminal, the user list. If at the server, a second request from the control terminal to view the user account associated with the terminal device is received, the method further includes responding to the second request by sending, from the server to the control terminal, the user account associated with the terminal device. An advantage of this part of the method is that the control terminal is provided with the capability of seeing the users within the area from the user list and the articles in each of the users' possession from the user account. This allows the control terminal and an operator thereof, such as a retail store manager, to make more informed management decisions.

According to a tenth aspect of the disclosure, a system comprising a terminal device and a server, wherein each of the terminal device and the server include a processor and a memory, is provided. The respective memory of each of the terminal device and the server have instructions thereon that cause the respective processor of the terminal device and the server to perform the method according to the ninth aspect of the invention, or any of the features described with reference thereto.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may be implemented in software, and vice versa. Any reference to software and hardware features herein should be construed accordingly.

### Brief Description of the Drawings

Examples of the invention will now be described in more detail, by way of example, and with reference to the drawings in which:
Figure 1 is a flow diagram of a method 100 according to a preferred embodiment;
Figure 2 is a flow diagram of a further method 200 according to the invention;
Figure 3 is a flow diagram of a further method 300 according to the invention;
Figure 4 is a flow diagram of a method 300a which gives more detail regarding the method 300 illustrated in Figure 3;
Figure 5 is flow diagram of a further method 500 according to the invention;
Figure 6 is a flow diagram of a further method 600 according to the invention;
Figure 7 flow diagram of a further method 700 according to a specific embodiment of the invention;
Figure 8 is a schematic diagram of a distributed computing system according to the invention;
Figure 9 is a schematic diagram of a terminal device according to the invention;
Figure 10 is schematic diagram of a server according to the invention;
Figure 11 is a schematic diagram of a weighing scale according to the invention;
Figure 12 is schematic diagram of a functional configuration of the invention;
Figure 13 is a flow diagram of a complimentary method according to the invention; and
Figure 14 is a schematic diagram of an area including a signal broadcasting means according to the invention.

### Detailed Description of the Preferred Embodiments

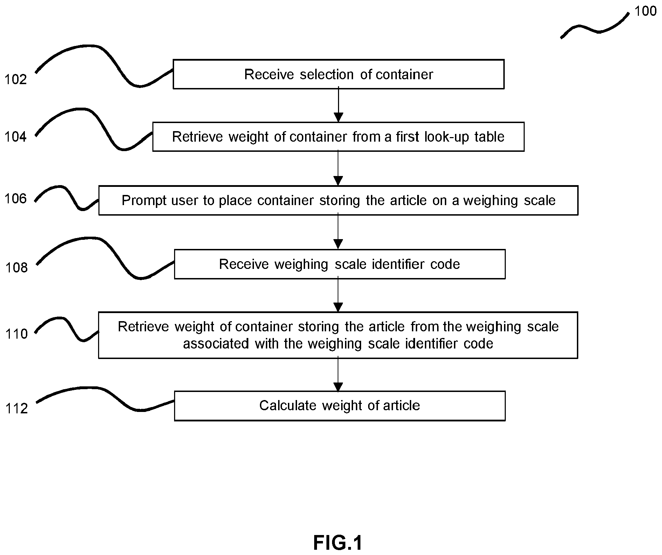

Figure 1 is a flow diagram of a method 100 of determining the weight of an article according to a first embodiment of the invention. The method is performed on a distributed computing environment including a terminal device, a server, and a weighing scale.

At step 102, a selection of a container from a user of the terminal device is received by the terminal device. The user is shown a container list corresponding to a first look-up table. The first look-up table includes a container identifier and an associated container weight for one or more containers. The user selects a container from the container list.

At step 104, a weight of the selected container is retrieved from the first look-up table, by searching for the container identifier associated with the selected container.

At step 106, the user is prompted, by the terminal device, to store an article in the container and place it on the weighing scale. Specifically, the user of the terminal is prompted via a message on a display of the terminal device to place the container, filled with the article, onto the weighing area of the weighing scale. The article is an item such as a purchasable product in a retail environment, and in particular is a loose item such as rice, grain, cereal or the like.

The weighing scale is associated with a weighing scale identifier code. The weighing scale sends weight measurement values corresponding to a weight present on a weighing area of the weighing scale to the server. The weight measurement value is stored, or replaces a previous weight measurement value, in a second look-up table. The second look-up table includes a weighing scale identifier code and an associated weighing scale measurement value for one or more weighing scales. When a weight measurement is sent to the second look-up table from the weighing scale to be stored, the weighing scale also sends its weighing scale identifier code. This allows the second look-up table to store the weight measurement value against the correct weighing scale identifier code. When the user places the container storing the article on the weighing area of the weighing scale, the weighing scale therefore sends a weight measurement value corresponding to the combined weight of the container and the article, and stores this weight measurement value in the second look-up table and associates it with the weighing scale identifier code of the weighing scale.

At step 108, the weighing scale identifier code for the weighing scale is received from the user inputting or scanning the weighing scale identifier code on the terminal device. The weight scale identifier code is sent from the terminal device to the server.

At step 110, after the weighing scale identifier code has been received, the weight measurement value associated with the weighing scale identifier code is retrieved from the second look-up table at the server. Hence, the weight measurement value corresponding to the combined weight of the container and the article is retrieved by looking up the weighing scale identifier code of the weighing scale and acquiring the associated weight measurement value.

At step 112, the weight of the article is subsequently calculated from the difference between the weight of the container and the combined weight of the container and the article, retrieved from the first look-up table and the second look-up table respectively.

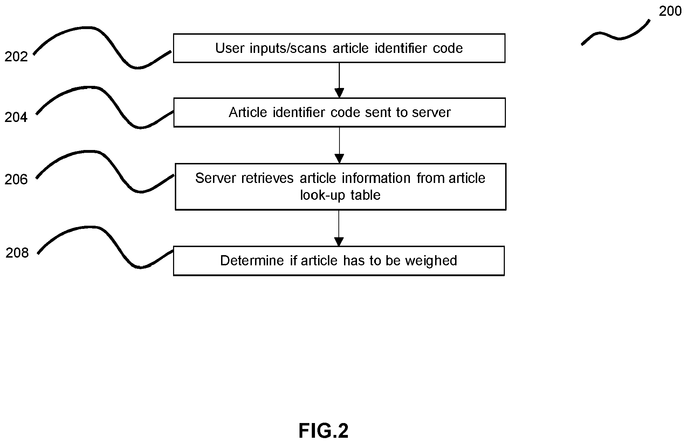

The method 100 thus allows the user to obtain a weight value of an article without manually weighing the article and with the capability of storing the article in a personal container. The invention will now be described in more detail with respect to Figures 2 to 6.

Figure 2 is a flow diagram of a method 200 according to the invention. Specifically, Figure 2 illustrates a further process of identifying the article which the user weighs in the method 100 according to Figure 1.

At step 202, the user scans or inputs an article identifier code using the terminal device. The article identifier code is encoded in a barcode or Quick Response (QR) code, and may be affixed to the article or on a shelf containing the article, as is usual practice in a conventional retail store. To input the article identifier code, the user operates a camera or barcode reader function of the terminal device to capture the QR code. Once the QR code is captured, the encoded article identifier code in the QR code is known to the terminal device.

At step 204, the article identifier code acquired by the user on the terminal device is sent to the server. The terminal device thus communicates with the server in order to transmit the article identifier code to the server.

At step 206, the server queries an article look-up table to retrieve information regarding the article or group of articles associated with the article identifier code. The article look-up table includes a plurality of article identifier codes, whereby each article identifier code is associated with information regarding an individual or group of articles. The information includes the name of the article, whether the article has a predetermined weight, and/or whether the article has a fixed price value that is independent of the weight of the article or a price-per-weight value.

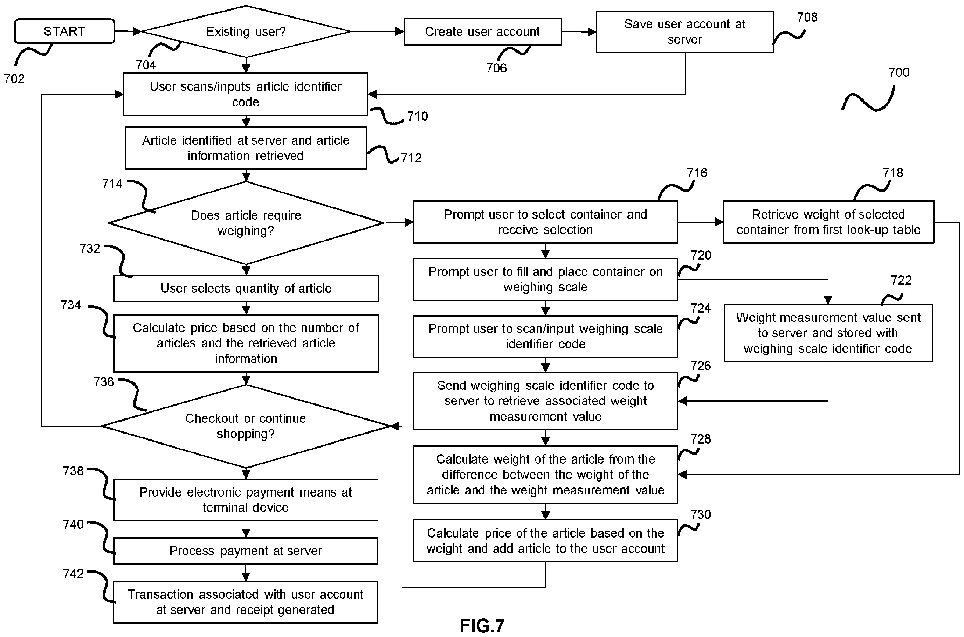

At step 208, it is determined whether, for the article associated with the article identifier code, the information includes a fixed price value or a predetermined weight. In other words, step 208 determines whether the article needs to be weighed to determine a price of the article. If the article has a fixed price value and/or a predetermined weight, and as such does not need weighing, the article is added to a virtual shopping cart associated with a user account on the server according to the method 700 as set out in Figure 7. If the article does not have a fixed price or a predetermined weight, and as such does need weighing, the method continues to step 102 according to Figure 1.

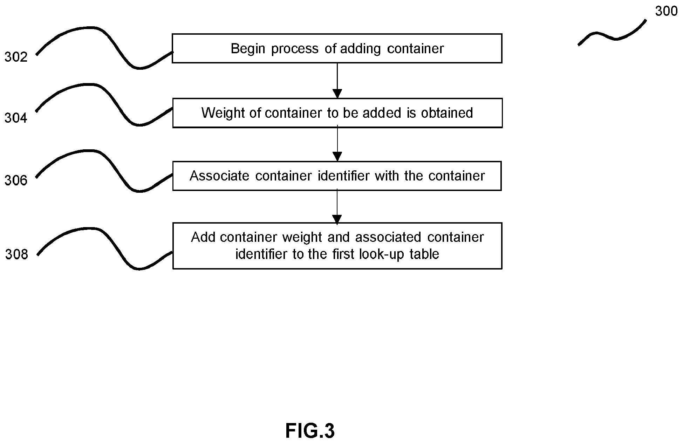

Figure 3 is a flow diagram of a method 300 according to the invention. Specifically, Figure 3 provides information concerning the additional process of providing a container list of one or more containers for the user to select according to step 102 in Figure 1. Before the method 300 is described below, it is to be understood that the container list is a list of containers displayed on the terminal device to the user in order for the user to select a container from the container list according to step 102. The first look-up table stores more information, including the weight of the containers and the container identifiers. The first look-up table can be maintained at either, or both of the server and the terminal device. If the first look-up table is maintained at the server, or both the server and the terminal device, and inputs are made by the user to the container list, such as addition, selection, and deletion of a container, then these changes are communicated to the server to change the first look-up table accordingly. If the first look-up table is maintained at the terminal device only, then this is not required, and the first look-up table can be changed directly at the terminal device. The one or more containers are initially added to the first look-up table via the method 300.

At step 302, the process of adding the container to the first look-up table begins. There are two ways in which this step can occur.

Firstly, if it is the user's first time using the invention and the method 100 according to Figure 1, the user is directed by the terminal device in step 302 to add a first container to an empty container list, corresponding to the first look-up table. In other words, upon first use of the invention, the user is required to add at least one container to the container list and first look-up table and is notified as such by the terminal device.

Secondly, the user can voluntarily select to add a new container to the container list and first look-up table.

At step 304, a weight of a container to be added to the first look-up table is obtained. This step includes weighing the container, in an empty state, on a weighing scale.

At step 306, the container to be added to the first look-up table is associated with a container identifier. The container identifier is unique to either the container it is associated with, or a group of the same type of container. For example, if the user has four containers that are of the same type, then the same container identifier is used for each of the four containers. The terminal device receives a container descriptor input by the user. The container descriptor includes at least one of an image of the container, a textual name of the container and/or a numerical identifier. The container descriptor is what is displayed to the user in the container list. The container descriptor can also be used as the container identifier for the purposes of the first look-up table, or the container identifier can be generated by the terminal device or the server.

At step 308, the container identifier and the associated weight of the container and are added to the first look-up table. Once the container and the associated container identifier are added to the first look-up table they are displayable on the terminal device in the container list, are can be selected by the user in step 102 of the method 100 according to Figure 1.

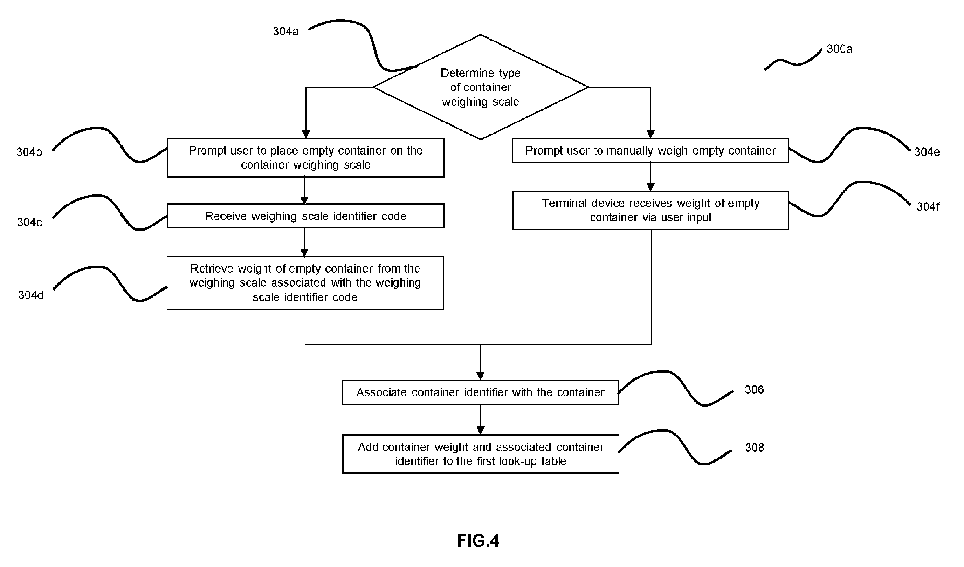

Figure 4 shows a method 300a that provides more detail regarding how the weight of the container is obtained in step 304 according to figure 3. The method 300a starts with step 302 as described above with reference to Figure 3.

Step 304 described above is described in more detail with reference to steps 304a to 304f in Figure 4.

At step 304a, the type of weighing scale to be used by the user to weigh the container to be added to the first look-up table is determined. This includes prompting the user to choose between a first option and a second option, wherein the first option indicates the user is able to use the type of weighing scale associated with a weighing scale identifier code, and the second option indicates the user wishes to use a different type of weighing scale. Upon selecting the first option, the method 300a moves to step 304b and continues to 304d. Upon selecting the second option, the method moves to step 304e and continues to 304f.

When the terminal device receives a selection of the first option from the user, the method of obtaining the weight of the container to be added to the first look-up table is effectively the same as the method as defined by step 106 through step 110 according to Figure 1, but with respect to the empty container rather than the container storing an article.

In particular, at step 304b, the user is prompted, by the terminal device, to place the empty container onto a weighing area of the container weighing scale of the type associated with a weighing scale identifier code. A retail store may include several weighing scales, each with its own unique weighing scale identifier code. The user could choose one of the several weighing scales to weigh the empty container and then the same or a different one of the several weighing scales to measure the combined weight of the container and the article. The weighing scale is associated with a weighing scale identifier code. The weighing scale sends a weight measurement value corresponding to a weight present on a weighing area of the weighing scale to the server. The weight measurement value is stored, or replaces a previous weight measurement value, in the second look-up table on the server.

At step 304c, the weighing scale identifier code for the weighing scale used to weigh the empty container is received from the user inputting or scanning the weighing scale identifier code on the terminal device.

At step 304d, after the weighing scale identifier code has been received, the weight measurement value associated with the weighing scale identifier code is retrieved from the second look-up table at the server. Hence, the weight measurement value corresponding to the weight of the empty container is retrieved by looking up the weighing scale identifier code of the container weighing scale and acquiring the associated weight measurement value.

When the terminal device receives a selection of the second option from the user, the method of obtaining the weight of the container to be added to the first look-up table starts at step 304e.

At step 304e, the user is prompted, by the terminal device, to manually weigh the empty container on the container weighing scale.

At step 304f, the terminal device receives a user input corresponding to the weight of the empty container, measured by the user using the weighing scale.

In-between steps 304e and 304f, the user thus weighs the empty container using the weighing scale, which could be a user-owned scale and is not required to be electronic or in communication with the server.

The method steps performed according to the first option, in steps 304b to 304d, and the second option, 304e and 304f, are then followed by further method steps that are common to both the first and second options, including steps 306 and 308.

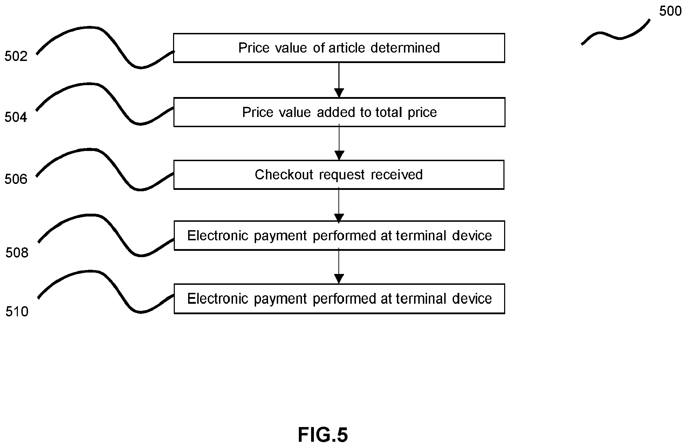

Figure 5 shows an additional method 500 according to the invention that relates to payment of one or more articles scanned by the user according to the method 100.

At step 502, a price value of the article is determined according to the calculated weight of the article. To do this, the article look-up table used to identify the article is queried to retrieve a price of the article per measure of weight. For example, the article 'rice' could be priced at £1.50 per kilogram. The calculated weight of the article is then multiplied by the price of the article per measure of weight to obtain the actual price value of the article. For example, the calculated weight of the article could be 2 kilograms, meaning the actual price value is equal to 2 kilograms multiplied by £1.50 per kilogram, giving a price value of £3.00.

At step 504, the price value of the article is added to a total price value. The total price value is a running total of the price values of each article scanned by the user. The price value of each scanned article and the total price value are stored in a virtual shopping cart associated with a user account at the server. The virtual shopping cart is displayed at the terminal device and includes a list of articles scanned by the user. The virtual shopping cart can be stored at the server and sent for display at the terminal device, stored at the terminal device alone, or stored at both the server and the terminal device.

At step 506, a checkout request is received from the user. Once the user has finished scanning articles, and wants to pay for the articles, the user inputs a checkout request on the terminal device.

At step 508, in response to the checkout request, electronic payment means are provided at the terminal device for the user to perform electronic payment of an amount equal to the total price value. The providing of electronic payment means include allowing a user to perform a mobile payment, providing an electronic form to fill in debit/credit card details, or providing third party payment software.

At step 510, the electronic payment is processed. Once the user completes the payment process, by for example, entering debit card details, payment information is sent to the server to be processed. A receipt is then electronically generated at the server and sent to the terminal device where it is displayed to the user. The receipt is stored at the server.

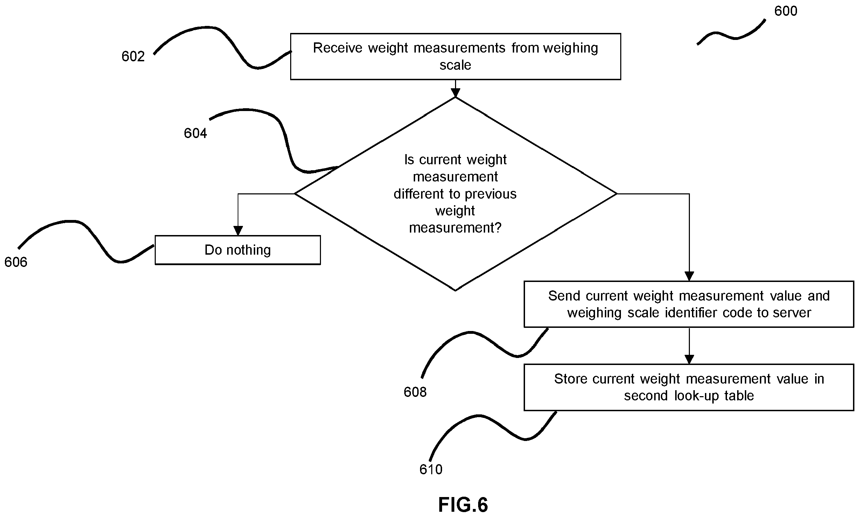

Figure 6 shows a method 600 according to the invention that provides more detail concerning the process of weighing the article according to steps 106 to 110 of Figure 1.

At step 602, a weight measurement is performed at the weighing scale to provide a current weight measurement value corresponding to a weight currently present on the weighing area of the weighing scale.

At step 604, the current weight measurement value is compared to a previous weight measurement value. The previous weight measurement value is the immediately previous weight measurement value, such that the current weight measurement value and the previous weight measurement value correspond to two consecutive measurements performed by the weighing scale. If the current weight measurement value is different to the previous weight measurement value, the process moves to step 608 and then step 610. If the current weight measurement value is not different to the previous weight measurement value, the process moves to step 606.

At step 606, if it is determined that there is not a difference between the current weight measurement value and the previous weight measurement value, no action is taken, such that the current weight measurement value is not sent to the server.

At step 608, if it is determined that there is a difference between the current weight measurement value and the previous weight measurement value, the current weight measurement value is sent to the server with the weighing scale identifier code. Hence, the weighing scale only transmits weight measurement values to the server when there has been a change in weight present on the weighing area of the weighing scale.

When determining whether there is a difference between the current weight measurement value and the previous weight measurement value, the difference may be required to be over a threshold value in order to move the method to step 608, and determine that a difference exists.

At step 610, the current weight measurement value is stored in the second look-up table at the server at the entry in the second look-up table corresponding or associated with the weighing scale identifier code.

In the context of the method 100 of the invention, this means that the weighing scale sends a weighing scale measurement when the weight present on the weighing scale changes, such as once the user places the container filled with the article on the weighing scale. This is efficient because the server is not constantly transmitted to by the weighing scale. Furthermore, this allows the user to fill the container on the weighing scale. As the weight of the article in the container increases as the user fills the container with more of the article, the weighing scale repeatedly sends the current weight scale measurement to the server with the weighing scale identifier code.

When the user has finished filling or weighing the container on the weight scale, the user scans or inputs the weighing scale identifier code on the terminal device. The weighing scale identifier code is then transmitted to the server where it is recognised and used to search for an associated weight measurement value in the second look-up table. The weight measurement value associated with the weighing scale identifier code is then used in combination with the weight of the container to calculate the weight of the article.

Additionally, the method 600 can further include, at step 608, if it is determined that there is a difference between the current weight measurement value and the previous weight measurement value, requiring that a further weight measurement value is identical to the current weight measurement value, before proceeding with transmitting the current weight measurement value and the weighing scale identifier code to the server. This ensures that the weight on the weighing area of the weighing scale is given a weight measurement value that is accurate and reliable, as it means the weighing scale waits to send the weight measurement value until the weighing scale is in a steady state. The further weight measurement value required to be identical is the weight measurement value that immediately follows the current weight measurement value. By 'identical', it is to be understood that the current weight measurement value and the further weight measurement value should be within a confidence threshold of each other, whereby the confidence threshold may be 5g, 0.5g, 0.05g or 0.005g for example.

This additional step may also be reflected in method 100 at the server. For example, at step 110, when the weight measurement value is to be retrieved, the weight measurement value is firstly found by searching the second look-up table. A time delay may then be introduced to ensure no changes are received from the weighing scale with respect to updates on the weight measurement value associated with the weighing scale identifier code. If the weight measurement value does not change during the time delay, or in other words, is not updated, then the weight measurement value is finally retrieved and the method continues at step 112. However, if the weight measurement value is updated at the second look-up table during the time delay, the method does not proceed directly to step 112. Instead, the time delay restarts until the weight measurement value at the second look-up table is consistent throughout the time delay. The time delay is configurable by an operator of the server, but may be 0.1s, 0.2s, 0.5s, or 1s. During the time delay, a prompt may be displayed on the terminal device to inform the user to wait for the weighing scale to settle.

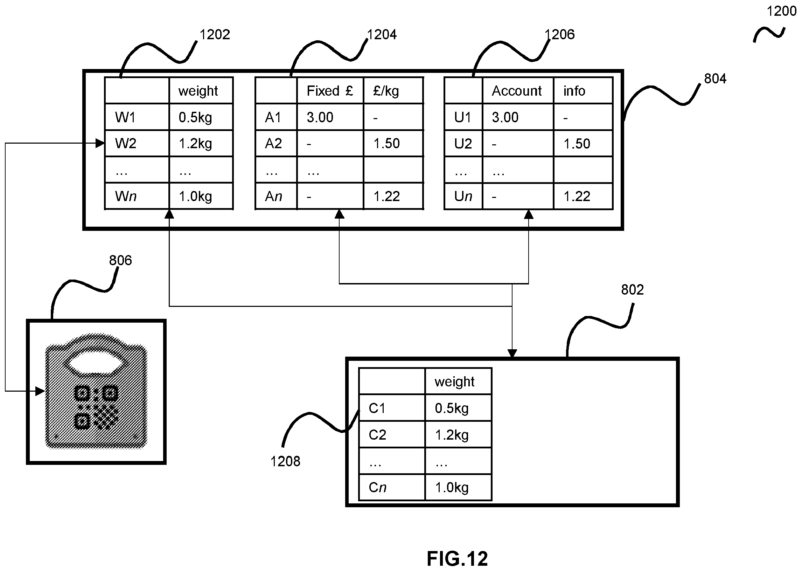

The methods 200, 300, 300a, 500, and 600 can be combined in any combination with the method 100 according to the invention. It is to be understood that, unless explicitly stated whether the terminal device or server is performing a certain method step, either or both of the terminal device and server can perform the method step. For example, the first look-up table can be maintained at the terminal device, the server, or both. Furthermore, once the weight measurement value is retrieved at step 110 or 304d, the weight measurement value can either be sent directly to the terminal device to perform steps 112 and 306 to 308 respectively, or these steps can be performed at the server. These configurations are explained in more detail later with reference to Figure 12.

Figure 7 shows a specific embodiment of the invention that is a combination of methods 100 to 500, applied in the context of a retail environment. The method 700 of Figure 7 is performed by a terminal device, a server, and a weighing scale. The server is communicatively coupled to each of the weighing scale and the server. The method 700 starts at node 702 in Figure 7.

At step 704, a terminal device is communicatively connected to a server. The server determines whether there is an existing user account associated with the terminal device by checking user account data at the server. If an existing user account does not exist, meaning that the terminal device is not associated with a user account, the process goes to step 706 and then step 708. If an existing user account does exist, meaning that the terminal device is associated with a user account, the process skips to step 710.

At step 706, the user is prompted to set up a user account on the terminal device by providing credentials such as a name, email-address and a method of payment.

At step 708, the credentials inputted by the user on the terminal device in step 706 are sent to the server and stored to form part of a new user account associated with the terminal device.

At step 710, once a user account is found or created, the user is able to start to shop by picking and scanning an article. The article may be any purchasable product in a retail store such as an item of food. The user scans or inputs an article identifier code corresponding to an article they wish to purchase into the terminal device.

At step 712, the article identifier code obtained in step 710 is sent to the server from the terminal device to identify the article to which it corresponds. At the server, an article look-up table is searched for the article identifier code. Each article identifier code in the article look-up table is associated with article information including a fixed price for the article, if the article does not need to be weighed, and a price-per-weight if the article does need to be weighed. This article information is retrieved from the article look-up table at the server.

At step 714, it is determined whether the article needs to be weighed for a price to be calculated, according to the article information retrieved in step 712. If the article does need to be weighed, the process continues to step 716 to step 730. If the article has a fixed price and does not need to be weighed, the process continues to step 732 and step 734.

At step 716, after determining the article needs to be weighed, a prompt is displayed on the terminal device for the user to prompt the user to select a container from a container list, and subsequently a selection of a container is received by the user. The container list at the terminal device includes the same containers included in the first look-up table discussed above with respect to Figures 1 and 3. The container list is maintained on the terminal device. The first look-up table may also be maintained at the terminal device. In this case, the first look-up table and the container list are the same. Alternatively, the first look-up table is maintained at the server and is associated with the user account. In this case, the terminal device stores the containers included in the first look-up table in the container list for selection.

It will be understood that, if the container list does not include any containers, a container is firstly added to the container list by implementing the method 300 according to Figure 3.

Once a selection of the container is received at the terminal device via input from the user in step 716, the weight of the selected container is retrieved from the first look-up table in step 718, and the user is prompted to fill the container with the article and place the container on the weighing scale, in step 720. The prompt is displayed on the terminal device.

Following step 720, the user proceeds to fill the container with a desired quantity of the article and places the article on the weighing scale.

At step 722, a measurement is performed by the weighing scale and a weight measurement value is produced. The weight measurement value is sent to the server and stored with the weighing scale identifier code associated with the weighing scale, according to the method 600 as discussed above.

At step 724, the user is prompted to scan or input the weighing scale identifier code associated with the weighing scale. The prompt is displayed on the terminal device. Optionally, the prompt of step 722 and the prompt of step 724 are displayed together. The user then proceeds to input or scan the weighing scale identifier code on the terminal device.

At step 726, the weighing scale identifier code is sent from the terminal device to the server. This is done to retrieve the weight measurement value produced in step 722. At the server, the weighing scales identifier code is received and the second look-up table is searched for the weighing scale identifier code. The weight measurement value associated with the weighing scale identifier code in the second look-up table is then retrieved.

At step 728, the weight of the article is calculated from the difference between the weight of the container retrieved in step 718 and the weight measurement value, which corresponds to the combined weight of the container and the article, retrieved in step 726. This calculation is performed either at the server or the terminal device.

At step 730, the price of the article is calculated according to the method 500. Specifically, the price-per-weight information for the article, retrieved from the article look-up table in step 712, is multiplied by the weight of the article, calculated in step 728. The calculation of the price of the article is performed at either of the server or the terminal device. The article and the price of the article are then added to a virtual shopping cart at the server, where they are associated with the user account. The virtual shopping cart refers to a list of articles which have been scanned by the user and their price determined. The user is shown, via a display on the terminal device, the virtual shopping cart, including the combined weight of the article and the container minus the weight of the container, equalling the weight of the article. The user is also shown the calculated price of the article.

When the article scanned in step 710 does not need to be weighed, at step 732, the user is prompted to input a quantity of the article that they wish to purchase. The terminal device then receives an input from the user, detailing the number of articles they wish to purchase.

At step 734, the price of the article, or articles if the user has inputted a quantity more than one, is calculated. The price is calculated by multiplying the quantity of the articles, acquired in step 732, by the fixed price per article, from the article information retrieved in step 712. The user is then shown, via the display on the terminal device, the quantity of articles and the price of the articles. The articles and their price are added to the virtual shopping cart associated with the user account at the server. The virtual shopping cart is displayed at the terminal device.

Each of steps 730 and 734 of the method then converge at step 736. At step 736, the user is able to repeat the process from step 710 by scanning a further article they wish to purchase. If the user does not wish to purchase a further article, they can interact with the terminal device to enter a checkout request. If a checkout request is received by the terminal at step 736, the process continues to step 738.

At step 738, in response to the user entering a checkout request, electronic payment means are provided to the user at the terminal device so that the user can pay for the one or more articles in the virtual shopping cart displayed at the terminal device and/or at the user account on the server. The electronic payment means may be any suitable means, such as providing the capability to enter debit/credit card details, providing third party payment software such as PayPal ^{™} or initiating a mobile payment using Apple Pay^{™}, Google Pay^{™}, or the like.

At step 740, once the user has performed the payment, the payment is processed at the server and verified.

At step 742, a transaction corresponding to the payment is associated with the user account at the server, and an electronic receipt is generated and associated with the user account.

The physical hardware that is required to perform the methods 100 to 700 according to Figures 1 to 7 will now be described. As stated above, method 100 requires a distributed computing environment of a terminal device, a server, and a weighing scale. Where functional modules are referred to in the following apparatus embodiments for carrying out various steps of the described methods above, it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

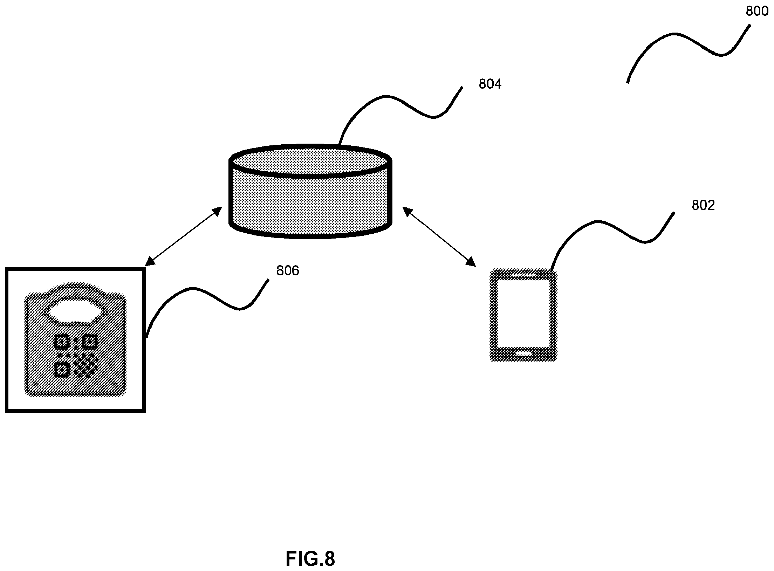

Figure 8 shows a distributed computing environment 800 according to the invention. The distributed computing environment includes a terminal 802, a server 804 and a weighing scale 806. The terminal device 802 and the weighing scale 806 are each capable of communicating with the server 804. The terminal device 802 may be a smartphone, a smartwatch, a tablet, a laptop or the like. The server may be a cloud computing architecture. The weighing scale 806 is configured to detect the weight of an article placed on a weighing area of the weighing scale.

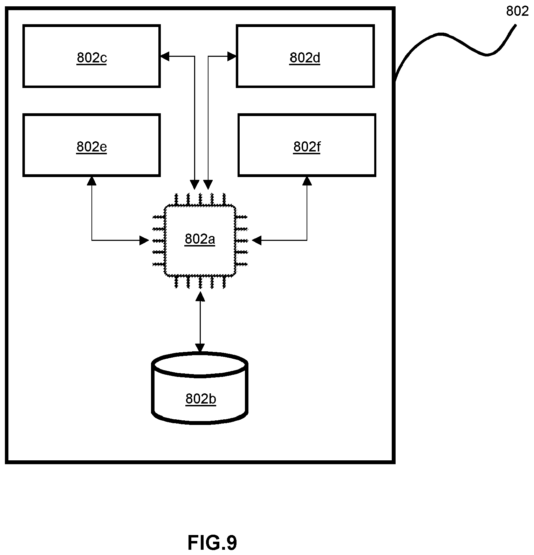

Figure 9 shows the terminal device 802 in more detail. The terminal device 802 includes a processing module 802a, a memory module 802b, an application module 802c, a communication module 802d, a display module 802e and an input module 802f. The processing module 802a controls and interacts with each of the memory module 802b, the application module 802c, the communication module 802d, the display module 802e and the input module 802f to perform the method of the terminal device according to the methods 100 to 700 described previously.

The memory module 802b is suitable for storing instructions, that, when executed by the processing module 802a, cause the processing module 802a to control the terminal device 802 to perform the role of the terminal device in the methods 100 to 700.

The application module 802c includes a software application that a user of the terminal device 802 interacts with in methods 100 to 700. In other words, the steps of the methods 100 to 700 relating to the terminal device are configured to be carried out through an application on the terminal device. The application may be integrated with third party applications or systems including third party point of sale systems and third party payment gateways.

The communication module 802d is suitable for communicating with the server 804. The communication module 802d may include at least one of a Bluetooth module, a Wi-Fi module, a Near-Field Communication (NFC) module, an infrared transmitter module and a cellular network module operable to perform 3G, 4G or 5G cellular communication.

The display module 802e comprises a display such as a screen. The display module 802e is configured to display various prompts and selectable options to the user of the terminal device when the methods 100 to 700 are performed.

The input module 802f may comprise at least one of a microphone, a touch-screen, a camera, a physical button and a biometric sensor. When performing the methods 100 to 700, the input module 802f is configured to receive the user input or scan of the article identifier code, the weighing scale identifier code and the selection of the container from the container list and/or first look-up table. The input module 802f is further configured to receive any one or more of interacting with a hardware button, a software button, performing a gesture, speaking a voice command or the like on the terminal device during operation of the application on which the method is run, to add a container request checkout, or make a payment, for example. When inputting the article identifier code and the weighing scale identifier code, the user preferably uses a camera of the input module 802f to take a picture or otherwise capture the article identifier code and the weighing scale identifier code.

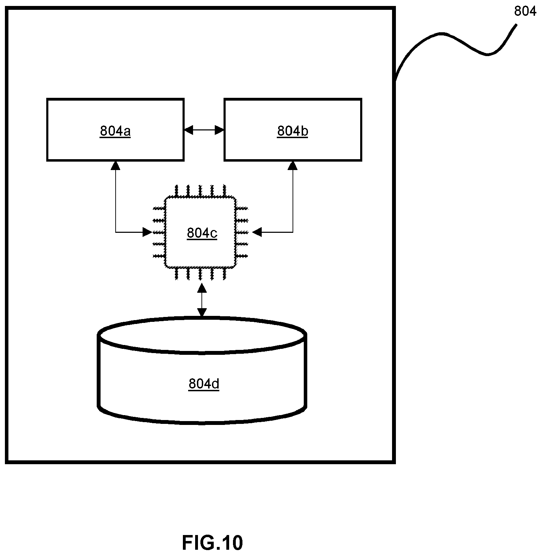

Figure 10 shows the server 804 in more detail. The server 804 includes a communication module 804a, an application module 804b, a processing module 804c and a memory module 804d. These modules interact with each other to perform the method steps performed by the server in methods 100 to 700 described previously.

The communication module 804a is configured to communicate with the terminal device 802 and the weighing scale 806. The communication module 804a may include at least one of a Bluetooth module, a Wi-Fi module, a Near-Field Communication (NFC) module, an infrared transmitter module and a cellular network module operable to perform 3G, 4G or 5G cellular communication. The communication module 804a may be implemented in software on the internet such that the server 804 can be accessed via an internet connection at the terminal device 802 and the weighing scale 806.

The application module 804b may include an application programming interface (API) layer on which the method steps relating to the server in methods 100 to 700 are performed. Such method steps include retrieving the weight measurement value from the second look-up table, retrieving article information from the article look-up table, processing a payment and calculating a weight and price of the article, for example.

The processing module 804c interacts with the communication module 804a, the application module 804b and the memory module 804d in order perform the methods 100 to 700 discussed above. The processing module 804c may include one or more processors, and may be implemented in a distributed computing environment such as a cloud computing environment.

The memory module 804d includes instructions which, when performed by the processing module 804c, cause the server 804 to perform the methods 100 to 700 discussed above. The memory module may store and maintain one or more of the second look-up table, the article look-up table, the first look-up table, user accounts, user payment methods, user receipts and transactions, weighing scale information and environment information.

As discussed previously with reference to methods 100 to 700, the second look-up table includes one or more weighing scale identifier codes, wherein each weighing scale identifier code is associated with a weight measurement value corresponding to a weight measurement performed by a weighing scale. New entries can be added to the second look-up table as and when a new weighing scale is introduced to the system. The second look-up table may further include weighing scale information associated with the weighing scale identifier code, wherein the weighing scale information includes the location of the weighing scale and/or specification information of the weighing scale.

The article look-up table includes one or more article identifier codes, wherein each article identifier code is associated with article information for a specific article. The article information includes a price-per-weight or a fixed price value of the article, and may further include a predetermined article weight, an article inventory level and further details regarding the article. New entries can be added to the article look-up table as and when a new article is introduced to the system.

The first look-up table includes one or more container identifiers, each associated with a specific container. The container identifiers are associated with a container weight that defines the weight of the actual container. A new entry to the first look-up table is added according to the method 300 discussed above.

The user account is associated with a specific terminal device. The user account may store saved payment methods, such as a debit card or credit card of the user, as well as receipts of previous transactions.

The server 804 may also communicate with third party applications and systems such as third party ecommerce systems. These third party systems may communicate with the server to provide a centralized inventory of articles, links to third party applications, third party payment service providers and advertisers, for example.

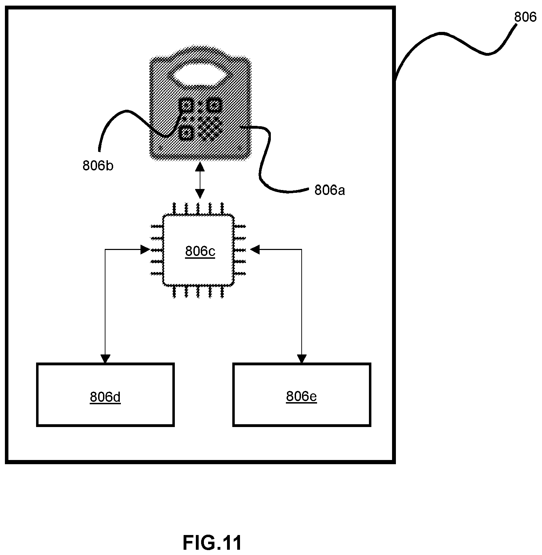

Figure 11 shows a detailed view of the weighing scale 806. The weighing scale 806 includes a weighing area 806a, a weighing scale identifier code 806b, a processor module 806c, a memory module 806d, and a communication module 806e.

These modules interact with each other to perform the method steps performed by the weighing scale in methods 100 to 700 described previously. The processing module 806c, the memory module 806d, and the communication module 806e may be connected to but physically separated from the weighing scale 806.

The weighing area 806a comprises conventional sensors configured to detect weight such as load cells.

The weighing scale identifier code 806b is displayed on the weighing scale 806. The weighing scale identifier code 806b may be permanently displayed, by being affixed to the weighing scale 806 for example, or may be selectively displayed on a display (not shown) of the weighing scale 806. The weighing scale may for example, only display the weighing scale identifier code 806b when or whilst a weight is detected on the weighing area 806a. This has the advantage of ensuring that the weight measurement value that is retrieved in response to scanning the weighing scale identifier code corresponds to a weight present on the weighing area 806a and not a weight equal to zero. In Figure 11 the weighing scale identifier code 806b is a QR code. However, the weighing scale identifier code can be any textual, numeric or graphic code, or a combination thereof.

The processing module 806c interacts with the weighing scale 806, the memory module 806d and the communication module 806e to perform the method according to methods 100 to 700 above, and in particular method 600.

The memory module 806d includes instructions stored thereon, which, when executed by the processor, cause the processor to perform the method 600 described above.

The communication module 806e is configured to communicate with the server 804 to send a weight measurement value and an associated weighing scale identifier code to the server. The communication module 806e may include at least one of a Bluetooth module, a Wi-Fi module, a Near-Field Communication (NFC) module, an infrared transmitter module and a cellular network module operable to perform 3G, 4G or 5G cellular communication.

In use, the weighing area 806a of the weighing scale 806 is configured to detect and measure a weight placed thereon. Preferably, measurements are taken by the weighing scale 806 continuously or at least more frequently than every five seconds and preferably more frequently than every second. The measurement data is sent to the processing module 806c via a USB/RS232 connection, for example, where the measurement data is then parsed to determine the weight measurement value. In this example, the weighing scale 806 can be comprised of any trade-approved weighing scale that has an RS232 or USB port, and a connected computer terminal that includes or connects to the processing module 806c, the memory module 806d, and the communication module 806e. The computer terminal can be a microcomputer or a minicomputer such as a Raspberry Pi^{™}, Arduino^{™}, or the like. The processing module 806c is then configured to perform the steps set out in the method 100 and 300 and more preferably 600 as discussed above.

Specific embodiments of the distributed computing system 800 of the invention will now be described with reference to Figure 12.

Figure 12 shows a functional configuration 1200 of the system 800. The configuration 1200 comprises the terminal device 802, the server 804 and the weighing scale 806.

According to a first example of the configuration 1200, the server 804 includes the second look-up table 1202, an article look-up table 1204, and a user list 1206. The terminal device 802 includes the container list 1208, which, in this example, is also the first look-up table.

As an example of the function of the first configuration, the method 100 is performed on the first configuration as follows.

At step 102, a selection of a container from a user of the terminal device 802 is received by the terminal device 802. The user is shown the container list 1208 corresponding to the first look-up table. The container list 1208 includes a container identifier and an associated container weight for one or more containers. The user selects a container from the container list 1208. The container identifier C1 to Cn may be inputted on the terminal device 802 when a container is added to the container list 1208 and first look-up table according to the method 300.

At step 104, a weight of the selected container is retrieved from the container list 1208 at the terminal device 802, by searching for the container identifier associated with the selected container.

At step 106, the user is prompted, by the terminal device 802, to store an article in the container and place it on the weighing scale 806.

The weighing scale 806 sends weight measurement values corresponding to a weight present on a weighing area of the weighing scale to the server 804. The weight measurement value is stored, or replaces a previous weight measurement value, in the second look-up table 1202 at the server 804. The second look-up table 1202 includes a weighing scale identifier code W1 to Wn and an associated weighing scale measurement values for one or more weighing scales. When a weight measurement is sent to the second look-up table from the weighing scale to be stored, the weighing scale 806 also sends its weighing scale identifier code. This allows the second look-up table 1202 to store the weight measurement value against the correct weighing scale identifier code.

At step 108, the weighing scale identifier code for the weighing scale 806 is received at the terminal device 802 from the user inputting or scanning the weighing scale identifier code on the terminal device 802. The weight scale identifier code is sent from the terminal device 802 to the server 804, where it is used to search the second look-up table 1202.

At step 110, after the weighing scale identifier code has been received, the weight measurement value associated with the weighing scale identifier code is retrieved from the second look-up table 1202 at the server 802. The weight measurement value is then sent to the terminal 802 from the server 804.

At step 112, the weight of the article is subsequently calculated at the terminal device 802 from the difference between the weight of the container and the combined weight of the container and the article, retrieved from the container list 1208 and the second look-up table 1202 respectively.

The article look-up table 1204 includes article identifier codes A1 to An and is used to identify an article and retrieve price information in order to determine whether the article needs to be weighed, according to methods 200 and 700. The article look-up table 1204 is maintained at the server.

The user list 1206 stores information relating to one or more user accounts. Each user account is associated with a terminal device identifier or user identifier, U1 to Un. The user list 1206 is used to retrieve information relating to the user account, including a transaction history, saved payment methods and a total price value according to methods 500 and 700.

According to a second example of the configuration 1200, the server 804 includes the second look-up table 1202, the article look-up table 1204, the user list 1206 and the first look-up table (not shown in Figure 12). The first look-up table may be associated with a specific user account in the user list 1206. The terminal device 802 includes the container list 1208, which, in this second example, is a locally saved list of containers that correspond to the containers in the first look-up table at the server 804.

The second example differs in that, at step 102, when a selection of a container from a user of the terminal device 802 is received by the terminal device 802, the container identifier code corresponding to the selection is sent from the terminal device 802 to the server 804. The server 804 then queries the first look-up table to retrieve the weight of the container from the first look-up table. The weight of the container may be sent back to the terminal device 802 as in the first example above, or it may be kept at the server 804.

If the container weight is kept at the server 804, the second configuration further differs from the first configuration in that, at step 110, when the weight measurement value is retrieved, it is also kept at the server 804. The step 112 to calculate the weight is then performed at the server 804 instead of the terminal device 802. The result of the calculations are then sent to the terminal device 802 to be displayed at the terminal device.

It is therefore to be understood that, when performing any of the methods 100 to 700 using the system 800, the terminal device 802 or the server 804 can be responsible for performing several combinations of steps of these methods.

The method and system discussed above may be complimented with a further method 1300 and system 1400 for determining that a user of the terminal device is leaving an area at an exit point with an unpurchased article.

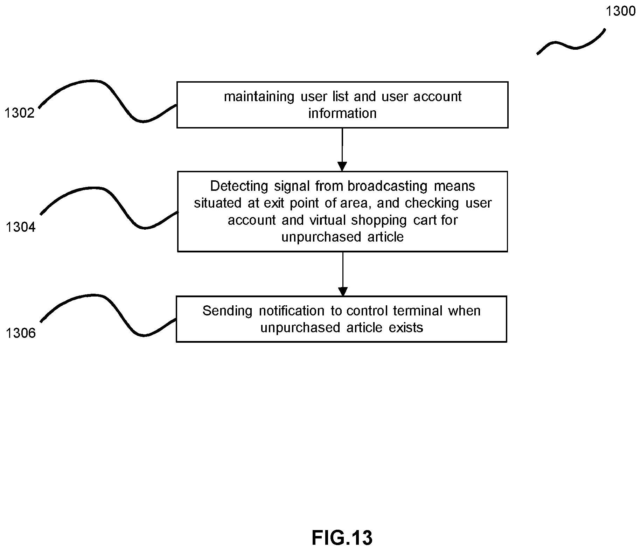

This method is described with reference to Figure 13.

At step 1302, a user list is maintained at the server. The user list includes one or more user accounts. Each user account is associated with a user identification code, and stores information about a user, including a virtual shopping cart. The virtual shopping cart includes articles scanned by the user as explained above. When retrieving/sending information from/to a specific user account in the user list, a terminal device sends the user identification code with a request for information to the server. Alternatively, the user account is associated with a terminal identification code corresponding to the terminal device used by the user, such that the terminal device is associated directly with the user account.

At step 1304, upon detecting, at the terminal device, a signal broadcast from a signal broadcasting means situated at or near an exit point of an area, the method further comprises checking the virtual shopping cart associated with the user account. This is done by sending, from the terminal device to the server, a notification that the signal has been detected, together with the user identification code. Then, the server checks the user account linked to the user identification code and searches the virtual shopping cart. The virtual shopping cart includes a list of one or more articles, the one or more articles being associated with a purchased or unpurchased status. The virtual shopping cart is stored at the server and associated with the user account. It is then determined whether there are unpurchased articles in the virtual shopping cart by searching for an unpurchased status.

The area is a retail store premises for example, and the exit point is a doorway. The signal broadcasting means transmits a continuous or frequent signal that is localised at the exit point to the area. In this example, the range of the signal is approximately 2m. However, it will be understood that the range of the signal can be adjusted according to the requirements of the area, between 0.5m and 5m. The signal is transmitted according to a protocol such as iBeacon for IOS and Eddystone for Android^{™}. The signal broadcasting means is a Bluetooth Low Energy (BLE) device that is configured to broadcast a low energy Bluetooth signal. This may be a standard terminal device or a BLE transmitter such as Sensoro^{™} or the like. The signal is configured to be detected by the terminal device even when an application for the methods 100 to 700 are not running on the terminal device. The signal can thus be detected in the background functioning of the terminal device.

At step 1306, upon determining that the user account includes an article associated with an unpurchased status, the method further comprises sending, from the server, a notification to a control device. The notification includes information about at least one of: the user of the terminal device, the terminal device, the user account, the unpurchased status, and the article associated with the unpurchased status. This allows an operator of the store to see, on the control device, that a user is leaving the area with an unpurchased article. The control device is thus accessible by staff or management of the area such as a retail store manager.

The method also includes means of viewing, by the control device, user accounts and current virtual shopping carts associated with terminal devices in the area. When an article identifier code inputted or scanned on the terminal device, is identified at the server according to the method 200, the user account associated with the terminal device is updated by adding the article to the user account and/or the virtual shopping cart. If, at the server, a first request from the control terminal to view the user list is received, the method further includes responding to the first request by sending, from the server to the control terminal, the user list. The first request is inputted at the control device. If at the server, a second request from the control terminal to view the user account associated with the terminal device is received, the method further includes responding to the second request by sending, from the server to the control terminal, the user account associated with the terminal device. This gives the control terminal the capability of seeing the users within the area from the user list and the articles in each of the users' possession from the user account.

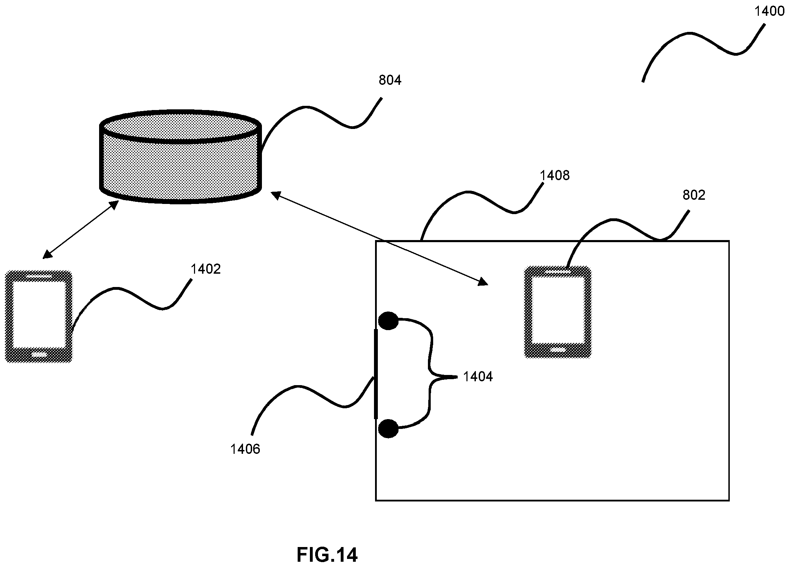

The system 1400 illustrated in Figure 14 includes the terminal device 802, the server 804, a control device 1402 and a signal broadcasting means 1404. The broadcasting means 1404 is situated at or near an exit point 1406 of an area 1408. The terminal device 802 and the server 804 communicate with each other as discussed previously. The control device 1402 and the server 804 are also configured to communicate with each other. The control device 1402 and the server 804 are not required to be within the area 1408 but can be if desired.

Throughout this description, the invention is described in the context of a retail environment. However, application of the invention is not limited thereto and is equally applicable in any other context, such as an industrial or personal environment.

## Claims

1. A method (100) of determining the weight of an article, the method (100) performed in a distributed computing environment including a terminal device, a server and a weighing scale, the method (100) comprising:
receiving (102), at a terminal device, a selection of a container from a user for storing an article;
retrieving (104) a weight of the selected container from a first look-up table, wherein the first look-up table includes a container identifier and an associated container weight for one or more containers;
prompting (106), by the terminal device, the user to place the container storing the article onto a weighing scale, the weighing scale being associated with a weighing scale identifier code, wherein the weighing scale sends a weight measurement value, corresponding to a weight present on the weighing scale, to a server, and wherein the weight measurement value is stored, or replaces a previous weight measurement value associated with the weighing scale identifier code, in a second look-up table, the second look-up table including a weighing scale identifier code and an associated weighing scale measurement value for one or more weighing scales;
receiving (108) the weighing scale identifier code of the weighing scale, inputted or scanned on the terminal device by the user;
retrieving (110), at the server, the weight measurement value associated with the weighing scale identifier code from the second look-up table, the weight measurement value corresponding to the combined weight of the container and the article; and
subsequently calculating (112) the weight of the article from the difference between the weight of the container and the combined weight of container and the article.

2. The method (300) of claim 1 further comprising, adding (302) an entry corresponding to the container to the first look-up table, including:
obtaining (304) the weight of the container;
associating (306) a container identifier with the container; and
adding (308) the weight of the container and the associated container identifier for the container to the first look-up table.

3. The method (300a) of claim 2, wherein obtaining the weight of the container comprises:
prompting (304b), by the terminal device, the user to place the container onto the weighing scale associated with the weighing scale identifier code;
receiving (304c) the weighing scale identifier code of the weighing scale inputted or scanned on the terminal device by the user; and
retrieving (304d), at the server, the weight measurement value associated with the weighing scale identifier code from the second look-up table, the weight measurement value corresponding to the weight of the container.

4. The method (300, 300a) of claim 2, wherein obtaining the weight of the container comprises:
prompting (304e), by the terminal device, the user to measure the weight of the container; and
receiving (304f), at the terminal device, via an input from the user, the weight of the container.

5. The method of any preceding claim, the method further comprising:
identifying (712) the article from an article identifier code inputted or scanned on a terminal device by a user.

6. The method (500) of claim 5 further comprising, after calculating the weight of the article:
determining (502) a price value of the article dependent on the weight of the article;
adding (504) the price value to a total price value;
receiving (506), from the user, a checkout request; and
in response to the checkout request, providing (508) payment means at the terminal device for the user to electronically pay an amount equal to the total price value.

7. The method (600) of any preceding claim, wherein the weighing scale sends a weight measurement value corresponding to a weight present on the weighing scale to the server upon determining that the weight measurement value is different from a previous weight measurement value associated with the weight scale identifier code of the weight scale.

8. The method (600) of claim 7, wherein determining that the weight measurement value is different from a previous weight measurement value associated with the weight scale identifier code of the weight scale comprises:
comparing (604) the previous weight measurement value to the weight measurement value; and
if the difference between the previous weight measurement value and the weight measurement value is greater than a threshold, determining (608) that the weight measurement value is different from the previous weight measurement value;
otherwise, if the difference between the previous weight measurement value and the weight measurement value is less than the threshold, determining (606) that the weight measurement value is not different from the previous weight measurement value, such that the weighing scale does not send the weight measurement value to the server.

9. The method according to any preceding claim, wherein the weighing scale (806) sends the weight measurement value to the server (804) substantially in real-time.

10. A method for determining the weight of an article, performed on a terminal device (802), the method comprising:
receiving (102), from a user, a selection of a container for storing an article;
prompting (106) the user to place the container storing the article onto a weighing scale, the weighing scale being associated with a weighing scale identifier code;
receiving (108) the weighing scale identifier code of the weighing scale, inputted or scanned by the user; and
either:
retrieving (110), from a second look-up table at the server, a weight measurement value associated with the weighing scale identifier code, the weight measurement value corresponding to the combined weight of the container and the article;
retrieving (718) a weight of the container from a first look-up table, wherein the first look-up table includes a container identifier and an associated container weight and for one or more containers; and
calculating (728) the weight of the article from the difference between the weight of the container and the combined weight of the container and the article;
or:
sending the selection of the container for storing the article to a server;
sending (726) the weighing scale identifier code of the weighing scale to the server; and
receiving (722) the weight of the article from the server, wherein the server calculates the weight of the article, by:
retrieving, from a second look-up table at the server, a weight measurement value associated with the weighing scale identifier code, the weight measurement value corresponding to the combined weight of the container and the article,
retrieving (718) a weight of the container from a first look-up table, wherein the first look-up table includes a container identifier and an associated container weight and for one or more containers, and
calculating (728) the weight of the article from the difference between the weight of the container and the combined weight of the container and the article.

11. A method for determining the weight of an article, performed on a server, the method comprising:
receiving (602), from a weighing scale, a weight measurement value corresponding to a weight present on the weighing scale, the weighing scale being associated with a weighing scale identifier code;
storing (610), or replacing a previous weight measurement value associated with the weighing scale identifier code with, the weight measurement value in a second look-up table, the second look-up table including a weighing scale identifier code and an associated weighing scale measurement value for one or more weighing scales; and
either:
receiving (102), from a terminal device, a selection of a container from a user;
retrieving (104) a weight of the container from a first look-up table, the first look-up table including a container identifier and an associated container weight for one or more containers;
receiving (108), from the terminal device, the weighing scale identifier code of the weighing scale;
retrieving (110) the weight measurement value associated with the weighing scale identifier code from the second look-up table, the weight measurement value corresponding to a combined weight of the container and an article; and
subsequently calculating (112) the weight of the article from the difference between the weight of the container and the combined weight of container and the article;
or:
receiving (108), from the terminal device, the weighing scale identifier code of the weighing scale; and
providing, to the terminal device, the weight measurement value associated with the weighing scale identifier code from the second look-up table, the weight measurement value corresponding to a combined weight of the container and the article.

12. The method of claim 11 further comprising:
receiving (710), from the terminal device, an article identifier code inputted or scanned by the user;
identifying (712) the article from the article identifier code;
determining (502) a price value of the article dependent on the weight of the article; and
adding (504) the price value to a total price value; and
optionally further comprising:
receiving (508), from the terminal device, an electronic payment; and
subsequently processing (510) the electronic payment.

13. A distributed computing system (800) comprising a terminal device (802), a server (804) and a weighing scale (806), wherein each of the terminal device (802), the server (804) and the weighing scale (806) include a processor and a memory, the server having a means for communicating with the terminal device (802) and the weighing scale (806), the weighing scale (806) and the terminal device (802) each having a means for communicating with the server (804),
the respective memory of each of the terminal (802), the server (804) and the weighing scale (806) having instructions thereon that cause the respective processor of the terminal (802), the server (804) and the one or more weighing scales (806) to perform the method according to any of claims 1 to 9.

14. A terminal device (802), including a memory (802b), a processor (802a), and means of communicating with a server (804), the memory (802b) having instructions stored thereon that cause the processor (802a) to perform the method of claim 10.

15. A server (804), including a memory (804d), a processor (804c), and means of communicating to a weighing scale (806) and a terminal device (802), the memory (804d) having instructions stored thereon that cause the processor (804c) to perform the method of any of claims 11 and 12.

## Patentansprüche

1. Verfahren (100) zum Bestimmen des Gewichts eines Artikels, wobei das Verfahren (100) in einer verteilten Rechenumgebung durchgeführt wird, die ein Endgerät, einen Server und eine Waage umfasst, wobei das Verfahren (100) Folgendes beinhaltet:
Empfangen (102), an einem Endgerät, einer Auswahl eines Behälters von einem Benutzer zum Aufbewahren eines Artikels;
Abrufen (104) eines Gewichts des ausgewählten Behälters aus einer ersten Nachschlagetabelle, wobei die erste Nachschlagetabelle eine Behälterkennung und ein assoziiertes Behältergewicht für einen oder mehrere Behälter enthält;
Auffordern (106) des Benutzers durch das Endgerät, den den Artikel aufbewahrenden Behälter auf eine Waage zu stellen, wobei die Waage mit einem Waagenkenncode assoziiert ist, wobei die Waage einen Gewichtsmesswert entsprechend einem auf der Waage vorhandenen Gewicht zu einem Server sendet, und wobei der Gewichtsmesswert in einer zweiten Nachschlagetabelle gespeichert wird oder einen mit dem Waagenkenncode assoziierten vorherigen Gewichtsmesswert ersetzt, wobei die zweite Nachschlagetabelle einen Waagenkenncode und einen assoziierten Waagenmesswert für eine oder mehrere Waagen enthält;
Empfangen (108) des vom Benutzer in das Endgerät eingegebenen oder gescannten Waagenkenncodes der Waage;
Abrufen (110), am Server, des mit dem Waagenkenncode assoziierten Gewichtsmesswerts aus der zweiten Nachschlagetabelle, wobei der Gewichtsmesswert dem kombinierten Gewicht des Behälters und des Artikels entspricht; und
anschließendes Berechnen (112) des Gewichts des Artikels aus der Differenz zwischen dem Gewicht des Behälters und dem kombinierten Gewicht von Behälter und Artikel.

2. Verfahren (300) nach Anspruch 1, das ferner das Hinzufügen (302) eines dem Behälter entsprechenden Eintrags zur ersten Nachschlagetabelle beinhaltet, einschließlich:
Erhalten (304) des Gewichts des Behälters;
Assoziieren (306) einer Behälterkennung mit dem Behälter; und
Hinzufügen (308) des Gewichts des Behälters und der assoziierten Behälterkennung für den Behälter zur ersten Nachschlagetabelle.

3. Verfahren (300a) nach Anspruch 2, wobei das Erhalten des Gewichts des Behälters Folgendes beinhaltet:
Auffordern (304b) des Benutzers durch das Endgerät, den Behälter auf die mit dem Waagenkenncode assoziierte Waage zu stellen;
Empfangen (304c) des vom Benutzer in das Endgerät eingegebenen oder gescannten Waagenkenncodes der Waage; und
Abrufen (304d), am Server, des mit dem Waagenkenncode assoziierten Gewichtsmesswerts aus der zweiten Nachschlagetabelle, wobei der Gewichtsmesswert dem Gewicht des Behälters entspricht.

4. Verfahren (300, 300a) nach Anspruch 2, wobei das Erhalten des Gewichts des Behälters Folgendes beinhaltet:
Auffordern (304e) des Benutzers durch das Endgerät, das Gewicht des Behälters zu messen; und
Empfangen (304f), am Endgerät, des Gewichts des Behälters über eine Eingabe des Benutzers.

5. Verfahren nach einem vorherigen Anspruch, wobei das Verfahren ferner Folgendes beinhaltet:
Identifizieren (712) des Artikels anhand eines von einem Benutzer in ein Endgerät eingegebenen oder gescannten Artikelkenncodes.

6. Verfahren (500) nach Anspruch 5, das nach dem Berechnen des Gewichts des Artikels ferner Folgendes beinhaltet:
Bestimmen (502) eines Preiswerts des Artikels in Abhängigkeit vom Gewicht des Artikels;
Addieren (504) des Preiswerts zu einem Gesamtpreiswert;
Empfangen (506) einer Checkout-Anforderung vom Benutzer; und
Bereitstellen (508), als Reaktion auf die Checkout-Anforderung, von Zahlungsmitteln am Endgerät für den Benutzer, um elektronisch einen Betrag entsprechend dem Gesamtpreiswert zu bezahlen.

7. Verfahren (600) nach einem vorherigen Anspruch, wobei die Waage einen Gewichtsmesswert entsprechend einem auf der Waage vorhandenen Gewicht nach der Feststellung zum Server sendet, dass sich der Gewichtsmesswert von einem früheren mit dem Waagenkenncode der Waage assoziierten Gewichtsmesswert unterscheidet.

8. Verfahren (600) nach Anspruch 7, wobei das Feststellen, dass sich der Gewichtsmesswert von einem mit dem Waagenkenncode der Waage assoziierten vorherigen Gewichtsmesswert unterscheidet, Folgendes beinhaltet:
Vergleichen (604) des vorherigen Gewichtsmesswerts mit dem Gewichtsmesswert; und
Feststellen (608), wenn die Differenz zwischen dem vorherigen Gewichtsmesswert und dem Gewichtsmesswert größer als ein Schwellenwert ist, dass sich der Gewichtsmesswert vom vorherigen Gewichtsmesswert unterscheidet;
andernfalls Feststellen (606), wenn die Differenz zwischen dem vorherigen Gewichtsmesswert und dem Gewichtsmesswert kleiner als der Schwellenwert ist, dass der Gewichtsmesswert sich nicht vom vorherigen Gewichtsmesswert unterscheidet, so dass die Waage den Gewichtsmesswert nicht zum Server sendet.

9. Verfahren nach einem vorherigen Anspruch, wobei die Waage (806) den Gewichtsmesswert im Wesentlichen in Echtzeit zum Server (804) sendet.

10. Verfahren zum Bestimmen des Gewichts eines Artikels, das auf einem Endgerät (802) durchgeführt wird, wobei das Verfahren Folgendes beinhaltet:
Empfangen (102), von einem Benutzer, einer Auswahl eines Behälters zum Aufbewahren eines Artikels;
Auffordern (106) des Benutzers, den den Artikel aufbewahrenden Behälter auf eine Waage zu stellen, wobei die Waage mit einem Waagenkenncode assoziiert ist;
Empfangen (108) des vom Benutzer eingegebenen oder gescannten Waagenkenncodes der Waage; und
entweder:
Abrufen (110) eines mit dem Waagenkenncode assoziierten Gewichtsmesswerts aus einer zweiten Nachschlagetabelle auf dem Server, wobei der Gewichtsmesswert dem kombinierten Gewicht des Behälters und des Artikels entspricht;
Abrufen (718) eines Gewichts des Behälters aus einer ersten Nachschlagetabelle, wobei die erste Nachschlagetabelle eine Behälterkennung und ein assoziiertes Behältergewicht für einen oder mehrere Behälter enthält; und
Berechnen (728) des Gewichts des Artikels aus der Differenz zwischen dem Gewicht des Behälters und dem kombinierten Gewicht des Behälters und des Artikels;
oder:
Senden der Auswahl des Behälters zum Aufbewahren des Artikels zu einem Server;
Senden (726) des Waagenkenncodes der Waage zum Server; und
Empfangen (722) des Gewichts des Artikels vom Server, wobei der Server das Gewicht des Artikels berechnet durch:
Abrufen, aus einer zweiten Nachschlagetabelle auf dem Server, eines mit dem Waagenkenncode assoziierten Gewichtsmesswerts, wobei der Gewichtsmesswert dem kombinierten Gewicht des Behälters und des Artikels entspricht,
Abrufen (718) eines Gewichts des Behälters aus einer ersten Nachschlagetabelle, wobei die erste Nachschlagetabelle eine Behälterkennung und ein assoziiertes Behältergewicht und für einen oder mehrere Behälter enthält, und
Berechnen (728) des Gewichts des Artikels aus der Differenz zwischen dem Gewicht des Behälters und dem kombinierten Gewicht des Behälters und des Artikels.

11. Verfahren, durchgeführt auf einem Server, zum Bestimmen des Gewichts eines Artikels, wobei das Verfahren Folgendes beinhaltet:
Empfangen (602), von einer Waage, eines Gewichtsmesswerts entsprechend einem auf der Waage vorhandenen Gewicht, wobei die Waage mit einem Waagenkenncode assoziiert ist;
Speichern (610) des oder Ersetzen eines mit dem Waagenkenncode assoziierten früheren Gewichtsmesswerts durch den Gewichtsmesswert in einer zweiten Nachschlagetabelle, wobei die zweite Nachschlagetabelle einen Waagenkenncode und einen assoziierten Waagenmesswert für eine oder mehrere Waagen enthält; und
entweder:
Empfangen (102), von einem Endgerät, einer Auswahl eines Behälters von einem Benutzer;
Abrufen (104) eines Gewichts des Behälters aus einer ersten Nachschlagetabelle, wobei die erste Nachschlagetabelle eine Behälterkennung und ein assoziiertes Behältergewicht für einen oder mehrere Behälter enthält;
Empfangen (108), von dem Endgerät, des Waagenkenncodes der Waage;
Abrufen (110) des mit dem Waagenkenncode assoziierten Gewichtsmesswertes aus der zweiten Nachschlagetabelle, wobei der Gewichtsmesswert einem kombinierten Gewicht des Behälters und eines Artikels entspricht; und
anschließendes Berechnen (112) des Gewichts des Artikels aus der Differenz zwischen dem Gewicht des Behälters und dem kombinierten Gewicht von Behälter und Artikel;
oder:
Empfangen (108), von dem Endgerät, des Waagenkenncodes der Waage; und
Bereitstellen, dem Endgerät, des mit dem Waagenkenncode assoziierten Gewichtsmesswerts aus der zweiten Nachschlagetabelle, wobei der Gewichtsmesswert einem kombinierten Gewicht des Behälters und des Artikels entspricht.

12. Verfahren nach Anspruch 11, das ferner Folgendes beinhaltet:
Empfangen (710), vom Endgerät, eines vom Benutzer eingegebenen oder gescannten Artikelkenncodes;
Identifizieren (712) des Artikels anhand des Artikelkenncodes;
Bestimmen (502) eines Preiswerts des Artikels in Abhängigkeit vom Gewicht des Artikels; und
Addieren (504) des Preiswerts zu einem Gesamtpreiswert; und
das optional ferner Folgendes beinhaltet:
Empfangen (508), vom Endgerät, einer elektronischen Zahlung; und
anschließendes Verarbeiten (510) der elektronischen Zahlung.

13. Verteiltes Rechensystem (800), das ein Endgerät (802), einen Server (804) und eine Waage (806) umfasst, wobei das Endgerät (802), der Server (804) und die Waage (806) jeweils einen Prozessor und einen Speicher enthalten, wobei der Server ein Mittel zum Kommunizieren mit dem Endgerät (802) und der Waage (806) aufweist, wobei die Waage (806) und das Endgerät (802) jeweils ein Mittel zum Kommunizieren mit dem Server (804) aufweisen,
wobei der jeweilige Speicher des Endgeräts (802), des Servers (804) und der Waage (806) Befehle enthält, die den jeweiligen Prozessor des Endgeräts (802), des Servers (804) und der ein oder mehreren Waagen (806) zum Durchführen des Verfahrens nach einem der Ansprüche 1 bis 9 veranlassen.

14. Endgerät (802) mit einem Speicher (802b), einem Prozessor (802a) und Mitteln zum Kommunizieren mit einem Server (804), wobei im Speicher (802b) Befehle gespeichert sind, die den Prozessor (802a) zum Durchführen des Verfahrens nach Anspruch 10 veranlassen.

15. Server (804) mit einem Speicher (804d), einem Prozessor (804c) und Mitteln zum Kommunizieren mit einer Waage (806) und einem Endgerät (802), wobei im Speicher (804d) Befehle gespeichert sind, die den Prozessor (804c) zum Durchführen des Verfahrens nach einem der Ansprüche 11 und 12 veranlassen.

## Revendications

1. Procédé (100) de détermination du poids d'un article, le procédé (100) étant réalisé dans un environnement informatique distribué comportant un dispositif terminal, un serveur et une balance, le procédé (100) comprenant :
la réception (102), au niveau d'un dispositif terminal, à partir d'un utilisateur, d'une sélection d'un contenant pour stocker un article ;
la récupération (104) d'un poids du contenant sélectionné à partir d'une première table de consultation, dans lequel la première table de consultation comporte un identifiant de contenant et un poids de contenant associé pour un ou plusieurs contenants ;
l'invitation (106), par le dispositif terminal, à l'utilisateur de placer le contenant stockant l'article sur une balance, la balance étant associée à un code d'identifiant de balance, dans lequel la balance envoie une valeur de mesure de poids, correspondant à un poids présent sur la balance, à un serveur, et dans lequel la valeur de mesure de poids est stockée, ou remplace une valeur de mesure de poids antérieure associée au code d'identifiant de balance, dans une deuxième table de consultation, la deuxième table de consultation comportant un code d'identifiant de balance et une valeur de mesure de balance associée pour une ou plusieurs balances ;
la réception (108) du code d'identifiant de balance, saisi ou scanné sur le dispositif terminal par l'utilisateur ;
la récupération (110), au niveau du serveur, de la valeur de mesure de poids associée au code d'identifiant de balance à partir de la deuxième table de consultation, la valeur de mesure de poids correspondant au poids combiné du contenant et de l'article ; et
puis le calcul (112) du poids de l'article à partir de la différence entre le poids du contenant et le poids combiné du contenant et de l'article.

2. Procédé (300) selon la revendication 1 comprenant en outre l'ajout (302) d'une entrée correspondant au contenant à la première table de consultation, comprenant :
l'obtention (304) du poids du contenant ;
l'association (306) d'un identifiant de contenant au contenant ; et
l'ajout (308) du poids du contenant et de l'identifiant de contenant associé pour le contenant à la première table de consultation.

3. Procédé (300a) selon la revendication 2, dans lequel l'obtention du poids du contenant comprend :
l'invitation (304b), par le dispositif terminal, à l'utilisateur de placer le contenant sur la balance associée au code d'identifiant de balance ;
la réception (304c) du code d'identifiant de balance saisi ou scanné sur le dispositif terminal par l'utilisateur ; et
la récupération (304d), au niveau du serveur, de la valeur de mesure de poids associée au code d'identifiant de balance à partir de la deuxième table de consultation, la valeur de mesure de poids correspondant au poids du contenant.

4. Procédé (300, 300a) selon la revendication 2, dans lequel l'obtention du poids du contenant comprend :
l'invitation (304e), par le dispositif terminal, à l'utilisateur de mesurer le poids du contenant ; et
la réception (304f), au niveau du dispositif terminal, par l'intermédiaire d'une entrée à partir de l'utilisateur, du poids du contenant.

5. Procédé selon l'une quelconque des revendications précédentes, le procédé comprenant en outre :
l'identification (712) de l'article à partir d'un code d'identifiant d'article saisi ou scanné sur un dispositif terminal par un utilisateur.

6. Procédé (500) selon la revendication 5 comprenant en outre, après le calcul du poids de l'objet :
la détermination (502) d'une valeur de prix de l'article en fonction du poids de l'article ;
l'ajout (504) de la valeur de prix à une valeur de prix total ;
la réception (506), à partir de l'utilisateur, d'une demande de paiement ; et
en réponse à la demande de paiement, la fourniture (508) d'un moyen de paiement au niveau du dispositif terminal permettant à l'utilisateur de payer électroniquement un montant égal à la valeur de prix total.

7. Procédé (600) selon l'une quelconque des revendications précédentes, dans lequel la balance envoie au serveur une valeur de mesure de poids correspondant à un poids présent sur la balance lorsqu'elle détermine que la valeur de mesure de poids est différente d'une valeur de mesure de poids précédente associée au code d'identifiant de balance.

8. Procédé (600) selon la revendication 7, dans lequel la détermination que la valeur de mesure de poids est différente d'une valeur de mesure de poids précédente associée au code d'identifiant de balance comprend :
la comparaison (604) de la valeur de mesure de poids précédente à la valeur de mesure de poids ; et
si la différence entre la valeur de mesure de poids précédente et la valeur de mesure de poids est supérieure à un seuil, la détermination (608) que la valeur de mesure de poids est différente de la valeur de mesure de poids précédente ;
dans le cas contraire, si la différence entre la valeur de mesure de poids précédente et la valeur de mesure de poids est inférieure au seuil, la détermination (606) que la valeur de mesure de poids n'est pas différente de la valeur de mesure de poids précédente, de telle sorte que la balance n'envoie pas la valeur de mesure de poids au serveur.

9. Procédé selon l'une quelconque des revendications précédentes, dans lequel la balance (806) envoie la valeur de mesure de poids au serveur (804) sensiblement en temps réel.

10. Procédé de détermination du poids d'un article, réalisé sur un dispositif terminal (802), le procédé comprenant :
la réception (102), à partir d'un utilisateur, d'une sélection d'un contenant pour stocker un article ;
l'invitation (106) à l'utilisateur de placer le contenant stockant l'article sur une balance, la balance étant associée à un code d'identifiant de balance ;
la réception (108) du code d'identifiant de balance, saisi ou scanné par l'utilisateur ; et
soit :
la récupération (110), à partir d'une seconde table de consultation au niveau du serveur, d'une valeur de mesure de poids associée au code d'identifiant de balance, la valeur de mesure de poids correspondant au poids combiné du contenant et de l'article ;
la récupération (718) d'un poids du contenant à partir d'une première table de consultation, dans lequel la première table de consultation comporte un identifiant de contenant et un poids de contenant associé et pour un ou plusieurs contenants ; et
le calcul (728) du poids de l'article à partir de la différence entre le poids du contenant et le poids combiné du contenant et de l'article ;
soit :
l'envoi de la sélection du contenant pour stocker l'article à un serveur ;
l'envoi (726) du code d'identifiant de balance de la balance au serveur ; et
la réception (722) du poids de l'article à partir du serveur, dans lequel le serveur calcule le poids de l'article, en :
récupérant, à partir d'une seconde table de consultation au niveau du serveur, une valeur de mesure de poids associée au code d'identifiant de balance, la valeur de mesure de poids correspondant au poids combiné du contenant et de l'article,
récupérant (718) un poids du contenant à partir d'une première table de consultation, dans lequel la première table de consultation comporte un identifiant de contenant et un poids de contenant associé et pour un ou plusieurs contenants, et
calculant (728) le poids de l'article à partir de la différence entre le poids du contenant et le poids combiné du contenant et de l'article.

11. Procédé de détermination du poids d'un article, réalisé sur un serveur, le procédé comprenant :
la réception (602), à partir d'une balance, d'une valeur de mesure de poids correspondant à un poids présent sur la balance, la balance étant associée à un code d'identifiant de balance ;
le stockage (610) de la valeur de mesure de poids, ou le remplacement d'une valeur de mesure de poids précédente associée au code d'identifiant de balance par la valeur de mesure de poids, dans une deuxième table de consultation, la deuxième table de consultation comprenant un code d'identifiant de balance et une valeur de mesure de balance associée pour une ou plusieurs balances ; et
soit :
la réception (102), à partir d'un dispositif terminal, à partir d'un utilisateur, d'une sélection d'un contenant ;
la récupération (104) d'un poids du contenant à partir d'une première table de consultation, la première table de consultation comportant un identifiant de contenant et un poids de contenant associé pour un ou plusieurs contenants ;
la réception (108), à partir du dispositif terminal, du code d'identifiant de balance ;
la récupération (110) de la valeur de mesure de poids associée au code d'identifiant de balance à partir de la deuxième table de consultation, la valeur de mesure de poids correspondant à un poids combiné du contenant et d'un article ; et
puis le calcul (112) du poids de l'article à partir de la différence entre le poids du contenant et le poids combiné du contenant et de l'article ;
soit :
la réception (108), à partir du dispositif terminal, du code d'identifiant de balance ; et
la fourniture, au dispositif terminal, de la valeur de mesure de poids associée au code d'identifiant de balance figurant dans la deuxième table de consultation, la valeur de mesure du poids correspondant à un poids combiné du contenant et de l'article.

12. Procédé selon la revendication 1 1, comprenant en outre :
la réception (710), à partir du terminal, d'un code d'identifiant d'article saisi ou scanné par l'utilisateur ;
l'identification (712) de l'article à partir du code d'identifiant d'article ;
la détermination (502) d'une valeur de prix de l'article en fonction du poids de l'article ; et
l'ajout (504) de la valeur de prix à une valeur de prix total ; et
éventuellement comprenant en outre :
la réception (508), à partir du dispositif terminal, d'un paiement électronique ; puis
le traitement (510) du paiement électronique.

13. Système informatique distribué (800) comprenant un dispositif terminal (802), un serveur (804) et une balance (806), dans lequel chacun du dispositif terminal (802), du serveur (804) et de la balance (806) comprend un processeur et une mémoire, le serveur ayant un moyen de communication avec le dispositif terminal (802) et la balance (806), la balance (806) et le dispositif terminal (802) ayant chacun un moyen de communication avec le serveur (804),
la mémoire respective de chacun du terminal (802), du serveur (804) et de la balance (806) comportant des instructions qui amènent le processeur respectif du terminal (802), du serveur (804) et des une ou plusieurs balances (806) à réaliser le procédé selon l'une quelconque des revendications 1 à 9.

14. Dispositif terminal (802), comportant une mémoire (802b), un processeur (802a) et des moyens de communication avec un serveur (804), la mémoire (802b) stockant des instructions qui amènent le processeur (802a) à réaliser le procédé selon la revendication 10.

15. Serveur (804), comportant une mémoire (804d), un processeur (804c) et des moyens de communication avec une balance (806) et un dispositif terminal (802), la mémoire (804d) stockant des instructions qui amènent le processeur (804c) à réaliser le procédé selon l'une quelconque des revendications 11 et 12.
